(19) Europäisches Patentamt
European Patent Office
Office européen des brevets

(11) **EP 3 978 561 B1**

(12) **EUROPEAN PATENT SPECIFICATION**

(45) Date of publication and mention of the grant of the patent:
**24.12.2025 Bulletin 2025/52**

(21) Application number: **20815163.9**

(22) Date of filing: **26.05.2020**

(51) International Patent Classification (IPC):
***C08J 3/205*** *(2006.01)* ***C08L 25/06*** *(2006.01)*
***D21C 9/00*** *(2006.01)* ***D21H 11/18*** *(2006.01)*
***C08J 3/22*** *(2006.01)* ***C08L 1/02*** *(2006.01)*

(52) Cooperative Patent Classification (CPC):
(C-Sets available)
**C08J 3/226; C08J 3/2053; C08L 1/02; C08L 25/06; D21C 9/007; D21H 11/18;** C08J 2323/12; C08J 2325/06; C08J 2353/02; C08J 2401/02; C08J 2423/08; C08J 2425/06 (Cont.)

(86) International application number:
**PCT/JP2020/020756**

(87) International publication number:
**WO 2020/241644 (03.12.2020 Gazette 2020/49)**

(54) **MELT MIXTURE, MELT MIXTURE PRODUCTION METHOD, COMPOSITION, COMPOSITION PRODUCTION METHOD, AND MOLDED ARTICLE**

SCHMELZMISCHUNG, VERFAHREN ZUR HERSTELLUNG EINER SCHMELZMISCHUNG, ZUSAMMENSETZUNG, VERFAHREN ZUR HERSTELLUNG EINER ZUSAMMENSETZUNG UND FORMKÖRPER

MELANGE FONDU, PROCEDE DE PRODUCTION DE MELANGE FONDU, COMPOSITION, PROCEDE DE PRODUCTION DE COMPOSITION AINSI QU'ARTICLE MOULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2019 JP 2019098265**

(43) Date of publication of application:
**06.04.2022 Bulletin 2022/14**


(73) Proprietor: **Chuetsu-Pulp and Paper Co., Ltd**
**Takaoka-shi, Toyama 933-8533 (JP)**

(72) Inventor: **HASHIBA, Hiromi**
**Takaoka-shi Toyama 933-8533 (JP)**

(74) Representative: **Murgitroyd & Company**
**165-169 Scotland Street**
**Glasgow G5 8PL (GB)**



(56) References cited:
**EP-A1- 3 211 031** **EP-B1- 1 885 765**
**WO-A1-2016/010016** **JP-A- 2014 101 604**
**JP-A- 2016 155 897** **JP-A- 2017 061 594**
**JP-A- 2018 154 749** **JP-A- 2019 131 792**
**JP-A- 2019 189 792** **JP-A- 2020 100 714**
**JP-A- H09 328 589** **US-A1- 2006 264 582**

- **MA LIBO ET AL: "Modified treatment for carbonized cellulose nanofiber application in composites", COMPOSITES PART A, ELSEVIER, AMSTERDAM, NL, vol. 90, 7 September 2016 (2016-09-07), pages 786 - 793, XP029737655, ISSN: 1359-835X, DOI: 10.1016/J.COMPOSITESA.2016.09.007**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **NAGALAKSHMAIAH MALLADI ET AL: "Melt extrusion of polystyrene reinforced with cellulose nanocrystals modified using poly [(styrene)-co-(2-ethylhexyl acrylate)] latex particles", EUROPEAN POLYMER JOURNAL, PERGAMON PRESS LTD OXFORD, GB, vol. 91, 18 April 2017 (2017-04-18), pages 297 - 306, XP085023084, ISSN: 0014-3057, DOI: 10.1016/ J.EURPOLYMJ.2017.04.020**
- **HAO WENSHUAI ET AL: "A review on nanocellulose as a lightweight filler of polyolefin composites", CARBOHYDRATE POLYMERS, APPLIED SCIENCE PUBLISHERS , LTD BARKING, GB, vol. 243, 25 May 2020 (2020-05-25), XP086174999, ISSN: 0144-8617, [retrieved on 20200525], DOI: 10.1016/ J.CARBPOL.2020.116466**
- **NING ZHIGANG ET AL: "Crystallization behavior, mechanical properties, and enzymatic degradation of biosourced poly(3-hydroxybutyrate-co-4-hydroxybutyrate)/ graphene nanocomposites", JOURNAL OF THERMAL ANALYSIS AND CALORIMETRY, KLUWER, DORDRECHT, NL, vol. 124, no. 3, 25 January 2016 (2016-01-25), pages 1705 - 1715, XP035682941, ISSN: 1388-6150, [retrieved on 20160125], DOI: 10.1007/S10973-016-5247-7**


(52) Cooperative Patent Classification (CPC): (Cont.)

C-Sets
**C08L 25/06, C08L 1/02**

## Description

### Technical Field

The present invention relates to a melt mixture, a melt mixture production method, a composition, a composition production method, and a molded article.

### Background Art

Biomass materials have been drawing attention from the viewpoint of environmental protection, and composite materials with a naturally derived organic filler or a biopolymer have begun to be used as the material for automobiles and the field of OA, electrical, and electronic equipment. In order to improve mechanical strengths including rigidity and heat resistance, a technique of adding an inorganic filler such as glass fibers to a resin composition has been studied. The inorganic filler, however, has a large specific gravity or is required to be added in a large amount. A resulting molded article accordingly has a larger specific gravity or gives a larger amount of a waste residue when burned or discarded, causing problems including an increase in environmental load.

Patent Document 1 discloses a technique of mixing a resin composition with a naturally derived organic filler such as jute fibers and rayon fibers, in order to produce a resin composition having excellent mechanical properties and flame retardancy by adding an aliphatic polyester and a naturally derived organic filler to an aromatic polycarbonate resin.

Patent Document 2 discloses techniques relating to powdery nanofibers capable of improving the dispersibility of nanofibers such as cellulose nanofibers in a matrix component including a thermoplastic resin, a thermosetting resin, or a rubber and to a composition containing the powdery nanofibers and a matrix component (a thermoplastic resin, a thermosetting resin, or a rubber).

The resin composition disclosed in Patent Document 1 and prepared by mixing a resin composition with a naturally derived organic filler such as jute fibers and rayon fibers, however, may give a molded article having a greatly lower impact strength or having a poor appearance, may greatly discolor, or may have insufficient thermal stability during molding. The powdery cellulose nanofibers disclosed in Patent Document 2 are a useful invention in terms of dispersibility in a matrix component. Non-Patent Literature 1 discloses a nanocomposite comprising acrylonitrile-butadienestyrene (ABS) and carbonized cellulose nanofibers (CCNF). Non-Patent Literature 2 discloses the melt extrusion of a high molecular weight polystyrene co(2-ethylhexyl acrylate) for non-covalent modification of cellulose nanofibers (CNC). Patent Literature 3 discloses a polyolefin composition comprising polyolefin and cellulose nanofibres having an average thickness of 10-200 nm. However, a further improvement in the production method or the physical properties or the like of a resulting resin composition is still demanded.

### Citation List

#### Patent Documents

Patent Document 1: JP 2010-215791 A
Patent Document 2: JP 6189559 B
Non-Patent Literature 1: MA LIBO ET AL: "Modified treatment for carbonized cellulose nanofiber application in composites",COMPOSITES PART A, vol. 90, 7 September 2016
Non-Patent Literature 2: NAGALAKSHMAIAH MALLADI ET AL: "Melt extrusion of polystyrene reinforced with cellulose nanocrystals modified using poly[(styrene) -co- (2-ethylhexyl acrylate)] latex particles", EUROPEAN POLYMER JOURNAL, vol. 91, 18 April 2017
Patent Document 3: EP 3 211 031 A1

### Summary of the Invention

#### Problems to be solved by the Invention

In view of the above circumstances, the present invention is intended to provide a melt mixture having higher dispersibility in a matrix component such as a resin, a method for producing the melt mixture, and a resin composition that contains the natural nanopolymer uniformly dispersed in a matrix component such as a resin, has excellent environmental characteristics, and gives a molded article having a sufficient impact strength, a low specific gravity, a high rigidity, and an excellent appearance.

The present invention is further intended to provide a resin composition unlikely to discolor.

As a result of intensive studies to solve the problems, the inventors of the present invention have found that the problems can be solved by adding, to a resin or the like, a particular amount of a melt mixture prepared by melting and mixing a natural nanopolymer having a particular average fiber diameter and a particular average fiber length with a polymer mainly containing a vinyl aromatic compound having a molecular weight in a particular range.

Means for solving the Problems

In other words, a melt mixture of the present invention includes cellulose nanofibers and 0.05 to 5 parts by mass of a styrenic polymer relative to 1 part by mass of the cellulose nanofibers, the styrenic polymer is prepared by polymerizing a monomer having a styrene skeleton in the presence of a Friedel-Crafts catalyst, and the melt mixture has a YI value of 38.02 or less.

Advantageous Effects

According to the present invention, a melt mixture having higher dispersibility in a matrix component such as a resin and a resin composition that gives a molded article having a sufficient impact strength, a high rigidity, and an excellent appearance can be provided. A melt mixture capable of suppressing discoloration of a resin composition itself and a resin composition unlikely to discolor are also provided.

Brief Description of the Drawings

FIG. 1 is a schematic diagram of a production (defibrating) apparatus of CNFs.
FIG. 2 is a schematic diagram of another production (defibrating) apparatus of CNFs.
FIG. 3 is a partially enlarged schematic diagram of the production (defibrating) apparatus of CNFs in FIG. 2.
FIG. 4 is a schematic view of a CNF by ACC method.
FIGS. 5 are schematic views of production methods of a composition in the present invention.
FIGS. 6 are views showing fracture morphology as the results of puncture impact test.
FIG. 7 is a photograph showing the result of puncture impact test in Example 42.
FIG. 8 is a photograph showing the result of puncture impact test in Example 43.
FIG. 9 is a photograph showing the result of puncture impact test in Example 44.
FIG. 10 is a photograph showing the result of puncture impact test in Comparative Example 18.
FIG. 11 is a view showing the result of dynamic viscoelastic measurement in Example 45 and Comparative Example 19.
FIG. 12 is a view showing the result of dynamic viscoelastic measurement in Example 46 and Comparative Example 20.

Mode for carrying out the Invention

[(A) Natural nanopolymer]

A natural nanopolymer used in the present invention is a fibrous substance having a diameter of not less than 1 nm and less than 1,000 nm and is natural polymer nanofibers having a length 100 times or more the diameter, or is natural polymer nanocrystals as rod-like or spindle-like ultrafine crystals having a diameter of 10 to 50 nm and a length of 100 nm or more and 500 nm or less.

Examples of the natural polymer used in the present invention include, but are not necessarily limited to, polysaccharides such as cellulose, chitin, and chitosan, proteins such as collagen and gelatin, polylactic acid, and polycaprolactam.

In the present invention, a natural nanopolymer having a crystallinity of 50% or more is preferably used. If a natural nanopolymer having a low crystallinity is used, the natural nanopolymer has a low specific surface area and thus has a poor loading capacity on a resin to reduce the strength, elasticity, and thixotropy. A resulting resin molded article has poor performances, and workability (resin flowability, shape retention properties of a resin molded article) deteriorates. A natural nanopolymer having a low crystallinity is likely to decompose.

In the present invention, a natural nanopolymer having an average degree of polymerization of 400 to 900 is preferably used. A natural nanopolymer having an average degree of polymerization of more than 900 has a low specific surface area and thus has a poor loading capacity on a resin to reduce the reinforcement effect on a resin. A natural

nanopolymer having an average degree of polymerization of less than 400 needs more steps for defibration, and this increases the production cost of a natural nanopolymer.

Methods for preparing aqueous solutions of cellulose nanofibers and cellulose nanocrystals using cellulose as a natural polymer will next be described. In the present invention, examples of the cellulose nanofibers (CNFs) include CNFs derived from polysaccharides contained in natural plants including seaweeds, such as wood fibers, broad-leaved tree fibers, conifer fibers, bamboo fibers, sugarcane fibers, seed hair fibers, and leaf fibers. Examples also include CNFs derived from polysaccharides contained in a product residue derived from plant leaves, flowers, stems, roots, and barks, such as bagasse, rice straw, used tea leaves, and fruit pomace. A single type of or a mixture of two or more types of these CNFs may be used as the CNFs. As the polysaccharide, a pulp having an α-cellulose content of 60% to 99% by mass is preferably used. When a pulp having such a purity as an α-cellulose content of 60% by mass or more is used, the fiber diameter and the fiber length are easily controlled, and entanglement of fibers can be suppressed. As compared with when a pulp having an α-cellulose content of less than 60% by mass is used, the thermal stability is high at the time of melting, and the impact strength does not deteriorate. In addition, satisfactory discoloration suppressive effect is achieved, and the effect of the invention can be highly provided. If a pulp having an α-cellulose content of 99% by mass or more is used, fibers are difficult to defibrate into nanofibers.

The CNFs in the present invention are produced as a CNF dispersion (hereinafter also called hydrated CNFs) by the following defibrating treatment.

The defibrating treatment is performed by an aqueous counter collision method (hereinafter also called an ACC method) shown in FIG. 1. This is a technique in which a pulp suspended in water is introduced into two facing nozzles (FIG. 1: 108a, 108b) in a chamber (FIG. 1: 107) and is ejected from these nozzles to collide with each other at a point. The apparatus shown in FIG. 1 is a liquid circulation apparatus and includes a tank (FIG. 1: 109), a plunger (FIG. 1: 110), two facing nozzles (FIG. 1: 108a, 108b), and an optional heat exchanger (FIG. 1: 11). In the apparatus, microparticles dispersed in water are introduced into the two nozzles and are ejected from the facing nozzles (FIG. 1: 108a, 108b) at high pressure to undergo counter collision in water.

Before the above defibrating treatment, a defibrating treatment may be performed by using a pretreatment apparatus (FIG. 2, FIG. 3). As another defibrating method, the pretreatment apparatus may be used. In the defibrating treatment by using the pretreatment apparatus, a high-pressure water at about 50 to 400 MPa is allowed to collide with 0.5 to 10% by mass of an aqueous polysaccharide mixture. This process can be performed by using the production apparatus 1 shown in FIG. 2, for example. The production apparatus 1 includes a polysaccharide slurry supply pathway 3 as a first liquid medium supply pathway provided to supply a polysaccharide slurry to a single chamber 2 and a second liquid medium supply pathway 4 provided to circulate a non-polysaccharide slurry such as water through the single chamber 2. The production apparatus includes, in the single chamber 2, an orifice ejection portion 5 to orifice-eject a non-polysaccharide slurry in the second liquid medium supply pathway 4 in a direction intersecting the supply direction of a polysaccharide slurry from the polysaccharide slurry supply pathway 3. The polysaccharide slurry supply pathway 3 can circulate a polysaccharide slurry through the single chamber 2.

The polysaccharide slurry supply pathway 3 and the second liquid medium supply pathway 4 have an intersection 6 in the single chamber 2.

The polysaccharide slurry supply pathway 3 includes a tank 7 that is a polysaccharide slurry supply portion and stores a polysaccharide slurry and a pump 8 on a circulation path 9. The second liquid medium supply pathway 4 includes a tank 10, a pump 11, a heat exchanger 12, and a plunger 13 on the liquid medium supply pathway 4 as a circulation path.

The non-polysaccharide slurry is, for example, water and generally also includes a slurry that is stored in the tank 10 and contains a nanonized polysaccharide at a concentration corresponding to the operation degree of the cellulose nanofiber production apparatus 1 as a non-polysaccharide slurry initially stored in the tank 10 is passed through the intersection 6.

As shown in FIG. 3, the circulation path 9 of the polysaccharide slurry supply pathway 3 is placed to penetrate the chamber 2. An orifice ejection port 15 of the orifice ejection portion 5 that is connected to the plunger 13 of the second liquid medium supply pathway 4 has an opening in the chamber 2 so as to orifice-eject a non-polysaccharide slurry in a direction intersecting the circulation path 9 to penetrate the circulation path 9. The chamber 2 has an outlet 16 at a position opposite to the orifice ejection port 15 in the chamber 2, and the outlet 16 of the chamber 2 is connected to the circulation path of the second liquid medium supply pathway 4. The second liquid medium supply pathway 4 is thus formed.

The circulation path 9 of the polysaccharide slurry supply pathway 3 is formed from, for example, a vinyl hose, a rubber hose, or an aluminum pipe, and to the circulation path 9 at the entrance side to the chamber 2, a one-way valve 17 configured to open only toward the chamber 2 is attached. To the circulation path 9 at the exit side from the chamber 2, a one-way valve 18 configured to open only in the discharge direction from the chamber 2 is attached. In addition, to the circulation path 9 between the chamber 2 and the one-way valve 18, an air inlet valve 19 is attached, and the air inlet valve 19 is to open only in the air suction direction from the outside to the circulation path 9.

With the above cellulose nanofiber production apparatus, cellulose nanofibers are produced in the following manner.

A non-polysaccharide slurry is circulated in the second liquid medium supply pathway 4 through the chamber 2. Specifically, the pump 11 is used to circulate a non-polysaccharide slurry in the tank 10, in the liquid medium supply pathway 4 through the heat exchanger 12 and the plunger 13. A polysaccharide slurry is circulated in the polysaccharide slurry supply pathway 3 through the chamber 2. Specifically, the pump 8 is used to circulate a polysaccharide slurry in the tank 7, in the circulation path 9 formed from, for example, a vinyl hose or a rubber hose.

Accordingly, to the polysaccharide slurry circulating in the polysaccharide slurry supply pathway 3 and passing through the chamber 2, the non-polysaccharide slurry circulating in the second liquid medium supply pathway 4 is orifice-ejected. Specifically, a high-pressure water is supplied from the plunger 13 to the orifice ejection port 15 connected to the plunger 13 and is orifice-ejected at a high pressure of about 50 to 400 MPa from the orifice ejection port 15 to the circulation path 9.

As a result, the high-pressure water passes through through-holes 27a, 27b formed in the circulation path 9 formed from, for example, a vinyl hose, a rubber hose, or an aluminum pipe, and the resulting non-polysaccharide slurry having passed inside the circulation path 9 in a direction intersecting the circulation path 9 is discharged toward the outlet 16 of the chamber 2 while catching the polysaccharide slurry circulating in the circulation path 9 and flows into the second liquid medium supply pathway 4. Accordingly, the non-polysaccharide slurry is recirculated in the second liquid medium supply pathway 4.

As the above process is repeated, the polysaccharide in the polysaccharide slurry circulating in the polysaccharide slurry supply pathway 3 and passing through the chamber 2 and the polysaccharide in the non-polysaccharide slurry circulating in the second liquid medium supply pathway 4 are gradually defibrated, and a CNF dispersion having a highly uniform defibration degree is produced for an intended purpose.

The defibration degree from pulp fibers into CNFs can be evaluated from the viscosity value of a CNF dispersion. CNFs contained in a CNF dispersion having a higher defibration degree have a shorter fiber length, and thus the dispersion has a lower viscosity value. In other words, a CNF dispersion having a higher defibration degree has a lower viscosity. CNFs contained in a CNF dispersion having a higher viscosity value have a longer fiber length, and thus the dispersion has a higher viscosity value. In other words, such a CNF dispersion has a lower defibration degree than the CNF dispersion having a lower viscosity.

The ratio (aspect ratio) of a fiber length to a fiber diameter after defibration varies with pulp fibers, and thus CNF dispersions have various viscosity values.

For example, by combining various types of pulp fibers or by adjusting the defibration degree, a 1 wt% aqueous CNF dispersion can be adjusted to have a viscosity of about 300 to 10,000 mPa·s.

The CNFs prepared as above have been nanonized by separating only the interaction between natural cellulose fibers. Hence, the structure of cellulose molecules is preserved and has the structural formula represented by Chemical Formula 1. In other words, the CNFs used in the present invention have six hydroxy groups in a cellobiose unit in Chemical Formula 1 and are not chemically modified. This can be ascertained by using FT-IR to compare IR spectra between cellulose and the CNFs used in the present invention. The ACC method enables pulverization of cellulose fibers into an average particle size of 10 μm, and consequently, CNFs having an average thickness of 3 to 200 nm and an average length of 0.1 μm or more can be produced.

The cellulose nanocrystals in the present invention are produced by subjecting cellulose fibers prepared by the ACC method to chemical treatment including acidic hydrolysis using an acid such as sulfuric acid or by subjecting a pulp before nanonization by the ACC method to chemical treatment including acidic hydrolysis with sulfuric acid or another acid and then nanonizing the chemically treated product by the ACC method. Cellulose nanocrystals are also called cellulose nanowhiskers.

The average thickness and the average fiber length can be determined as follows: CNFs are observed under a microscope appropriately selected from a scanning electron microscope (SEM), a transmission electron microscope (TEM), a scanning probe microscope (SPM), and the like; 20 or more fibers selected from a captured photograph are measured; and the measured values are averaged. In the counter collision treatment, the applied energy is far less than the covalent bond cleavage energy (estimated 1/300 or less), and the polymerization degree of cellulose is unlikely to decrease. The cellulose nanofibers prepared by the ACC method have hydrophilic sites and hydrophobic sites and exhibit amphipathicity.

[Chemical Formula 1]

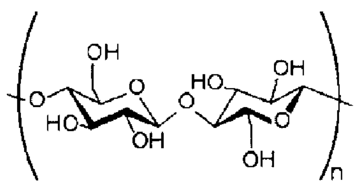

In the present invention, even cellulose nanofibers prepared by another known method for producing cellulose nanofibers, using chemical treatment such as TEMPO oxidation catalyst treatment, phosphoesterification treatment, ozone treatment, enzyme treatment, maleic acid treatment, hydrophobic modification with an alkenyl succinic anhydride, hydrophobic modification with an alkyl ketene dimer, and hydrophobic modification by acetylation or cellulose nanofibers prepared by a physical method for thinning cellulose fibers in wet milling using a mechanical action of, for example, a grinder, a disc refiner, and a conical refiner are also usable as the CNF dispersion in the present invention. Cellulose nanofibers prepared by a combination method of chemical treatment and physical treatment are also usable as the CNF dispersion.

When the natural nanopolymer prepared as above is dispersed in a solvent at a solid content concentration of 20% or more, the natural nanopolymer has a higher wettability with a dispersant and is unlikely to form aggregates. Hence, the natural nanopolymer can be efficiently dispersed in a resin. If dispersed at a solid content concentration of less than 20%, cellulose nanofibers are likely to form aggregates together, and thus the aggregates reduce the dispersibility in a resin. In addition, a decrease in resin temperature during kneading invites uneven shear forces during the kneading to impair uniform dispersion in the kneading step, and thus such a condition is unfavorable. Moreover, a kneader is prevented from having a higher temperature, and the thermal energy is lost.

[(B) Polymer mainly containing vinyl aromatic compound having molecular weight in particular range]

A polymer mainly containing a vinyl aromatic compound having a molecular weight in a particular range is a styrenic polymer mainly containing a vinyl aromatic compound. Examples of the vinyl aromatic compound include styrene, α-methylstyrene, p-methylstyrene, vinyltoluene, and vinylxylene, and styrene is preferred. Examples of the styrenic polymer include oligomers of polystyrene, rubber-modified polystyrene, acrylonitrile-styrene, acrylonitrile-butadiene-styrene, methyl methacrylate-butadiene-styrene, acrylonitrile-acrylic acid-styrene, styrene-maleic acid copolymer, and styrene-butadiene-styrene copolymer, hydrogenated products thereof, and a polymer having repeating units derived from a monomer having a styrene skeleton. Of them, a styrene polymer and an acrylonitrile-styrene polymer are preferred particularly from the viewpoint of physical properties and costs. Styrenic polymers may be used singly or as a mixture of two or more of them.

The styrenic polymer of the present invention is prepared by polymerizing or copolymerizing a monomer having a styrene skeleton in the presence of a Friedel-Crafts catalyst and has a weight average molecular weight of 200 or more, preferably 750 or more, and more preferably 1000 or more and of 4,000 or less, preferably 3,800 or less.

The styrenic polymer can be a commercially available product. Examples of the commercially available product include trade name "ARUFON (registered trademark) UP-1150" manufactured by Toagosei, trade name "YS Resin SX-100, a weight average molecular weight of 1,500" manufactured by Yasuhara Chemical, Piccolastic A5 (a polystyrene, a softening point of 5°C, a weight average molecular weight of 350), Piccolastic A-75 (a polystyrene, a softening point of 74°C, a weight average molecular weight of 1,300), Piccotex 75 (a copolymer of vinyltoluene and α-methylstyrene, a softening point of 75°C, a weight average molecular weight of 1,100), Piccotex LC (a copolymer of vinyltoluene and α-methylstyrene, a softening point of 91°C, a weight average molecular weight of 1,350), Kristalex 3070 (a poly-α-methylstyrene, a softening point of 70°C, a weight average molecular weight of 950), Kristalex 3085 (a poly-α-methylstyrene, a softening point of 85°C, a weight average molecular weight of 1,150), Kristalex 3100 (a poly-α-methylstyrene, a softening point of 100°C, a weight average molecular weight of 1,500), and Kristalex 5140 (a poly-α-methylstyrene, a softening point of 139°C, a weight average molecular weight of 4,900) manufactured by EASTMAN, and HIMER ST-95 (a polystyrene, a softening point of 95°C, a weight average molecular weight of 4,000; manufactured by Sanyo Chemical Industries).

(Ratio of styrenic polymer to CNFs in melt mixture)

The melt mixture of the present invention contains 1 part by mass of a natural nanopolymer (A) and a styrenic polymer (B) at 0.05 to 5 parts by mass, preferably 0.1 parts by mass to 1 part by mass, and more preferably 0.2 parts by mass to 0.6 parts by mass preferably in terms of solid. If contained at less than 0.05 parts by mass, the styrenic polymer has no effect on the dispersibility of cellulose nanofibers. If contained at more than 5 parts by mass, the styrenic polymer greatly degrades strength properties and causes problems on the surface of a molded article due to bleeding or the like.

(Method for producing melt mixture)

The melt mixture of the present invention is produced by mixing a natural nanopolymer dispersion (A) and a styrenic polymer (B) by using, for example, a mixer to give a natural nanopolymer mixture and then heating, shearing, and dehydrating the mixture by using, for example, a twin-screw extruder or a pressure kneader. Through the process, hydroxy groups of the natural nanopolymer are bonded to the styrenic polymer, but the natural nanopolymer is not hydrogen-bonded together.

The production method firstly includes a mixing step of mixing a natural nanopolymer dispersion (A) and a styrenic polymer (B). For the mixing, a high-speed mixer typified by a tumbling mixer, a Henschel mixer, a ribbon blender, and a super mixer can be used.

The production method next includes a powdering step of applying heat and shear force to the resulting natural nanopolymer mixture to remove water from the mixture.

The powdering may be performed by any means that can apply heat and shear force. Specific examples of the means include a single screw extruder, a twin-screw extruder, a twin-screw kneader, a kneader, a Banbury mixer, a reciprocating kneader, and a roll kneader. A continuous extruder such as a twin-screw kneader enables efficient continuous operation to a kneading step with a resin or the like and thus is particularly preferably used. To remove volatile components such as water generated in the powdering step, a deaerator or the like may be used. The heating conditions of the natural nanopolymer mixture, including a heating temperature and a heating time, are not specifically limited, as long as the heating temperature includes the softening point of the styrenic polymer.

By changing the combination ratio of the natural nanopolymer to the styrenic polymer, a powder of the melt mixture or pellets of the melt mixture can be produced. When an extruder or the like with a T-die is used, a sheet-like melt mixture can be produced.

[(C) Resin component]

Examples of the resin component (C) used in the composition of the present invention include a thermoplastic resin (C-1), a thermosetting resin (C-2), and a rubber (C-3).

(C-1) Thermoplastic resin

The thermoplastic resin in the description is a resin to be melt-molded by heat. Specific examples include at least one selected from each group of general purpose plastics such as polyethylenes (HDPE, MDPE, LDPE), polyvinyl chloride, polypropylene, polystyrene, ABS resins, and AS resins (copolymers of polystyrene and acrylonitrile), general purpose engineering plastics such as methacryl resins, polyamide, polyacetal, polycarbonate, modified polyphenylene ether, polyethylene terephthalate, and ultra-high molecular weight polyethylene, super engineering plastics such as polysulfone, polyethersulfone, polyphenylene sulfide, polyarylate, polyamideimide, polyetherimide, polyether ketone, polyimide, liquid crystal polymers, and fluorine resins, and biodegradable plastics such as polylactic acid, polycaprolactone, and polybutylene succinate. A resin that is soluble in water or is a liquid at normal temperature and is usable as a liquid, such as PVA and polyethylene glycol, can also be used. These thermoplastic resins may be used singly or in combination of two or more of them.

(C-2) Thermosetting resin

When a thermosetting resin (C-2) is used as the matrix component (C) in the resin composition of the present invention, the thermosetting resin is uniformly dispersed with the cellulose nanofibers in the resin composition of the present invention. The thermosetting resin may be any type. Examples of the thermosetting resin include epoxy resins, phenol resins, urea resins, melamine resins, polyurethane, unsaturated polyester resins, silicon resins, polyimide resins, and diallyl phthalate resins. A resin that is soluble in water or is a liquid at normal temperature and is usable as a liquid, such as a dicyclopentadiene resin, can also be used. These thermosetting resins may be used singly or in combination of two or more of them.

(C-3) Rubber

Examples of the rubber to be used include natural rubber, chloroprene rubber, ethylene-propylene-non-conjugated diene copolymer rubber, ethylene-butene-1 copolymer rubber, ethylene-hexene copolymer rubber, ethylene-octene copolymer rubber, polybutadiene, styrene-butadiene block copolymer rubber, styrene-butadiene copolymer rubber, partially hydrogenated styrene-butadiene-styrene block copolymer rubber, styrene-isoprene block copolymer rubber, partially hydrogenated styrene-isoprene block copolymer rubber, polyurethane rubber, styrene-graft-ethylene-propylene-non-conjugated diene copolymer rubber, styrene-graft-ethylene-propylene copolymer rubber, styrene/acrylonitrile-graft-ethylene-propylene-non-conjugated diene copolymer rubber, styrene/acrylonitrile-graft-ethylene-propylene copolymer rubber, chlorosulfonated polyethylene rubber, silicon rubber, ethylene-vinyl acetate rubber, epichlorohydrin rubber, and polysulfide rubber. These rubbers may be used singly or in combination of two or more of them.

A polymer alloy prepared by adding such a rubber to the above resin (C-1), (C-2) may be used. A rubber usable in the liquid state, such as latex rubber, is also usable. The content of the rubber in a polymer alloy is preferably 50% by mass

or less from the viewpoint of adding novel characteristics to the characteristics of a resin.

(Content of each component in resin composition)

The composition of the present invention contains 0.5 to 50% by mass of the natural nanopolymer (A), 0.025 to 30% by mass of the styrenic polymer (B), and 20 to 99.475% by mass of the resin component (C) [where (A) + (B) + (C) = 100% by mass].

If the component (A) is contained at less than 0.5%, the resulting composition has insufficient strength as compared with a resin alone. If the component (A) is contained at more than 50% by mass, the melt viscosity is increased, and the resulting resin composition has poor moldability.

If the styrenic polymer (B) is contained at less than 0.025% by mass, the natural nanopolymer (A) such as cellulose nanofibers is insufficiently dispersed to reduce the compatibility with the resin component (C). If the styrenic polymer (B) is contained at more than 30% by mass, the resin component dissolves only a dispersant, and physical properties such as mechanical properties deteriorate.

If the resin component (C) is contained at less than 20% by mass, the moldability deteriorates, and a composite cannot be prepared in the kneading process of the composition. If the resin component (C) is contained at more than 99.475% by mass, the composition is difficult to differentiate from the resin component alone.

(Method for producing resin composition)

<Method for producing composition>

The composition of the present invention can be produced by using the powdery natural nanopolymer prepared as above and a thermoplastic resin, a thermosetting resin, or a rubber.

The method for producing the composition of the present invention is produced by a step of including kneading a powdery natural nanopolymer mainly containing a natural nanopolymer (A) and a styrenic polymer (B) with a resin component (C).

The kneading is a step of kneading and mixing the powdery natural nanopolymer prepared as above and a matrix component (C).

As the kneader, a known kneader such as a single screw extruder, a twin-screw extruder, a twin-screw kneader, a kneader, a Banbury mixer, a reciprocating kneader, and a roll kneader can be used.

In the production of the composition of the present invention, the temperature during melting and kneading is appropriately set depending on the melting temperature of a matrix component (C) and is, for example, a temperature 20 to 30°C higher than the melting point of a component (C). If the temperature during melting and kneading is lower than the melting point, a resin to be kneaded does not melt, and the composition cannot be substantially produced. If the temperature during melting and kneading is higher than the melting point range, the natural nanopolymer (A) used for production is damaged by heat to cause molecular chain breakage, oxidation degradation, modification, or the like, and mechanical properties are reduced. In addition, unpleasant odor or discoloration may be caused.

When a thermosetting resin (C-2) is used as the matrix component (C), neither a curing catalyst nor a curing agent should be added during the melting and kneading so as not to cause thermal curing during the melting and kneading.

[Additives]

As long as the physical properties are not impaired or in order to impart functionalities such as impact resistance and energy absorbability, to the melt mixture or the composition of the present invention during mixing, molding, or production, other resins or additives, such as various thermoplastic elastomers including a styrenic elastomer, an olefinic elastomer, a polyvinyl chloride elastomer, a urethane elastomer, an ester elastomer, an amide elastomer, a 1,2-BR elastomer, and a fluorine elastomer, a compatibilizer, a surfactant, a starch, a polysaccharide, gelatin, glue, a natural protein, tannin, zeolite, ceramics, a metal powder, a pigment, a dye, a reinforcement, a filler, a heat-resistant material, an oxidation inhibitor, a heat stabilizer, a weathering agent, a lubricant, a release agent, a crystal nucleating agent, a coloring agent, a flavoring agent, a leveling agent, a plasticizer, a flow improver, a conductive agent, an electrification inhibitor, an ultraviolet absorber, an ultraviolet dispersant, a deodorant, and a metallic soap can be added.

An additive may be contained at any content as long as the effect of the invention is not impaired. For example, for the melt mixture, the content is preferably 50% by mass or less in the melt mixture. For the composition, the content is preferably about 15% by mass or less and more preferably about 10% by mass or less in the composition.

Examples of the thermoplastic elastomer in the present invention include a mixture of a polymer having hard segments and a polymer having soft segments and a copolymer of a polymer having hard segments and a polymer having soft segments.

For the styrenic thermoplastic elastomer, examples of the hard segment include a segment of polystyrene. Examples of the soft segment include segments of polybutadiene, hydrogenated polybutadiene, polyisoprene, and hydrogenated polyisoprene. More specifically, examples include block copolymers such as styrene-butadiene-styrene (SBS) copolymer, styrene-isoprene-styrene (SIS) copolymer, styrene-ethylene-butylene-styrene (SEBS) copolymer, styrene-ethylene-propylene-styrene (SEPS) copolymer, and styrene-butadiene-butylene-styrene (SBBS) copolymer. These elastomers may be used singly or as a mixture of two or more of them.

For the polyolefin elastomer, examples of the hard segment include segments of polypropylene, propylene-ethylene copolymer, and polyethylene. Examples of the soft segment include segments of polyethylene and a copolymer of ethylene and a small amount of a diene component. More specifically, examples include ethylene/butene copolymer, EPR (ethylene-propylene copolymer), modified ethylene/butene copolymer, EEA (ethylene-ethyl acrylate copolymer), modified EEA, modified EPR, modified EPDM (ethylene-propylene-diene terpolymer), ionomer, $\alpha$-olefin copolymer, modified IR (isoprene rubber), modified SEBS (styrene-ethylene-butylene-styrene copolymer), halogenated isobutylene-p-methylstyrene copolymer, modified ethylene-acrylic acid, ethylene-vinyl acetate copolymer, acid-modified products thereof, and mixtures mainly containing them. These elastomers may be used singly or as a mixture of two or more of them.

For the polyester thermoplastic elastomer, examples of the hard segment include segments having a polyester structure, and examples of the soft segment include segments of polyether or polyester copolymers.

For the urethane elastomer, examples of the hard segment include polyurethanes formed by reacting a diisocyanate with a short-chain diol as a chain extender. Examples of the soft segment include polymer diols such as polyester diols, polyether diols, and polycarbonate diols.

Examples of the compatibilizer in the present invention include compounds having a polar group with high affinity to cellulose and a hydrophobic group with high affinity to a resin. More specifically, examples of the polar group include maleic anhydride, maleic acid, and glycidyl methacrylate, and examples of the hydrophobic group include polypropylene and polyethylene.

Examples of the metallic soap in the present invention include, but are not necessarily limited to, metal salts of aliphatic carboxylic acids, metal salts of alicyclic carboxylic acids, and metal salts of aromatic carboxylic acids. The metallic soap is preferably a metal salt of an aliphatic carboxylic acid having 35 or less carbon atoms, more preferably a metal salt of a monocarboxylic acid having 35 or less carbon atoms, and even more preferably a metal salt of a monocarboxylic acid having 10 to 32 carbon atoms. Examples of the metal salt include salts of alkali metals, alkaline earth metals, and zinc, and of them, a zinc salt is preferred.

The crystal nucleating agent in the present invention is not specifically limited. From the viewpoint of impact resistance and moldability of a resin composition, the crystal nucleating agent is preferably at least one selected from the group consisting of a compound having a hydroxy group and an amido group in the molecule, a metal salt of phenylphosphonic acid, phthalocyanine, a metal salt of a phosphate ester, a metal salt of an aromatic sulfonic acid dialkyl ester, a metal salt of a rosin acid, an aromatic carboxylic acid amide, a rosin acid amide, a carbohydrazide, an N-substituted urea, a salt of a melamine compound, an uracil, and talc.

Examples of the surfactant in the present invention include the following agents. Examples of the ionic surfactant include cationic surfactants, amphoteric surfactants, and anionic surfactants. Examples of the cationic surfactant include alkylamine salts and quaternary ammonium salts. Examples of the amphoteric surfactant include alkylbetaine surfactants and amine oxide surfactants. Examples of the anionic surfactant include alkylbenzene sulfonates such as dodecylbenzenesulfonate, aromatic sulfonate surfactants such as dodecyl phenyl ether sulfonate, monosoap anionic surfactants, ether sulfate surfactants, phosphate surfactants, and carboxylic acid surfactants.

Examples of the nonionic surfactant include sugar ester surfactants such as sorbitan fatty acid ester and polyoxyethylene sorbitan fatty acid ester, fatty acid ester surfactants such as polyoxyethylene resin acid ester and polyoxyethylene fatty acid diethyl, ether surfactants such as polyoxyethylene alkyl ether, polyoxyethylene alkyl phenyl ether, and polyoxyethylene/polypropylene glycol, and aromatic nonionic surfactants such as polyoxyalkylene octylphenyl ether, polyoxyalkylene nonylphenyl ether, polyoxyalkyl dibutylphenyl ether, polyoxyalkyl styrylphenyl ether, polyoxyalkyl benzylphenyl ether, polyoxyalkyl bisphenyl ether, and polyoxyalkyl cumylphenyl ether. In the above examples, the alkyl can be an alkyl having 1 to 20 carbon atoms. These surfactants may be used singly or in combination of two or more of them.

In the present invention, the inventions of "a melt mixture" and "a composition" are also defined by production methods as particular matters. The reasons will next be described with reference to FIG. 4 and FIGS. 5.

As shown in FIG. 4, a CNF prepared by the ACC method characteristically has hydrophobic faces and hydrophilic faces. The characteristics are explained as follows.

At an ACC ejection pressure of 200 MPa, the energy is supposedly insufficient for cleavage of hydrogen bonds in a glucan sheet but can cleave only van der Waals force between accumulated sheets. As a result, hydrophobic moieties of the glucan sheet are newly exposed on the surface of nanofibers.

A method for producing a composition in FIG. 5(a), or the production method of the present invention is produced by steps including a step of melting and kneading CNFs together with a compatibilizer, a surfactant, a thermoplastic

elastomer, and the like to give a melt mixture and a step of melting and kneading the resulting melt mixture with a resin. In contrast, a method for producing a composition in FIG. 5(b) is produced by a step of melting and kneading CNFs with a compatibilizer, a surfactant, a thermoplastic elastomer, a resin, and the like.

The difference between the methods is found in the compatibilizer or the like around the CNFs in the resulting composition. In other words, in the method in FIG. 5(a), CNFs are covered with a compatibilizer and the like in advance, and accordingly the compatibilizer and the like is around the CNFs in the composition. This can further strengthen the interfacial adhesion between the CNFs and the compatibilizer and the like and can efficiently improve physical properties of the composition. In contrast, in the method in FIG. 5(b), CNFs and a compatibilizer and the like are simultaneously melted and kneaded, and thus the compatibilizer and the like are not necessarily around the CNFs in the composition. The likelihood that the compatibilizer and the like are around the CNFs is therefore lower than in FIG. 5(a).

The composition produced by the production method in FIG. 5(a) is difficult to generally identify. This is because the proportion of any component around CNFs in a composition cannot be analyzed by analysis techniques when the present invention is applied. Even if an electron microscope or the like were used to observe the inside of a composition while the inside of the composition is exposed, only the specific state could be revealed, and the whole actual state in the composition cannot be identified. In addition, the ratio of hydrophobic faces to hydrophilic faces on a starting material in FIG. 5(a) and the proportion of any component on the CNF surface in a melt mixture cannot be analyzed by analysis techniques when the present invention is applied, for a similar reason to the above reason.

Directly identifying a melt mixture and a composition produced as in the present invention in terms of structures or characteristics involves markedly excessive costs and time, and thus unambiguous definition is actually difficult when the present invention is applied.

In the present invention, hence, the production methods of the melt mixture and the composition are matters used to define the invention.

<Molding>

The resin composition of the present invention produced as above is subjected to various molding methods into molded articles. The molding method varies with a thermoplastic resin composition, a thermosetting resin composition, and a rubber composition, and a molding method can be appropriately selected from the following methods.

In other words, to produce a plate-like product from the composition of the present invention, extrusion molding is typically used, and flat pressing can also be used. In addition, profile extrusion molding, blow molding, compression molding, vacuum molding, injection molding, and the like can be used. To produce a film-like product, melt extrusion or solution casting can be used. For melt molding, examples include blown film process, cast process, extrusion lamination process, calendering process, sheet forming, fiber forming, blow molding, injection molding, rotational molding, and coating process. For active energy ray curable resins, various curing methods using active energy rays can be used to produce a molded article. In particular, when cellulose nanofibers are added to a liquid thermoplastic resin, examples include a molding method in which a molding material is made into prepregs, and the prepregs are pressed and heated with a press or an autoclave, as well as RTM (resin transfer molding), VaRTM (vacuum assisted resin transfer molding), FW (filament winding) molding, lamination molding, and hand lay-up molding.

## Examples

The present invention will be described more specifically with reference to the following examples, but the present invention is not limited to the examples. The average degrees of polymerization described in examples and comparative examples were determined by the following procedure.

(Determination of degree of polymerization of CNFs)

In 30 mL of 0.5 M copper ethylenediamine solution, 0.15 g of CNFs in terms of solid content were dissolved, and the viscosity $\eta$ of the CNF-copper ethylenediamine solution was measured by using a Cannon-Fenske kinematic viscometer. The limiting viscosity $[\eta]$ was determined in accordance with the Schulz-Blaschke formula where $\eta 0$ is the viscosity of the 0.5 M copper ethylenediamine solution, and the degree of polymerization DP was calculated in accordance with the Mark-Houwink-Sakurada formula.

Specific viscosity,

$$\eta sp = \eta/\eta 0-1$$

Limiting viscosity,

$$[\eta] = \eta sp/\{c(1 + A \times \eta sp)\}$$

$\eta 0$ is the viscosity of 0.5 M copper ethylenediamine solution; c is the CNF concentration (g/mL); and A is an eigenvalue defined according to the type of solution and is 0.28 for 0.5M copper ethylenediamine solution.
Degree of polymerization,

$$DP = [\eta]/Ka$$

K and a are each eigenvalue defined according to the type of polymer or solvent; and K = 0.57 and a = 1 for a cellulose dissolved in a copper ethylenediamine solution.

(Example 1)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 7:3 (1:0.4).
Next, the prepared mixture of the CNFs and the styrenic oligomer was fed to a twin-screw extruder (Japan Steel Works, model: TEX25αIII) to give powdery cellulose nanofibers. The used screws had Φ25 mm, and the resin temperature was set at 135°C.

(Example 2)

The same procedure as in Example 1 was performed except that an aqueous CNF mixture derived from bamboo pulp (a CNF solid content of 35%, a water content of 65%, an average degree of polymerization of 810) was mixed with a styrenic polymer (manufactured by Yasuhara Chemical, YS RESIN SX100) at a ratio of 9:1 (1:0.1), giving powdery cellulose nanofibers.

(Comparative Example 1)

The same procedure as in Example 1 was performed except that an aqueous CNF mixture derived from bamboo pulp (a CNF solid content of 35%, a water content of 65%, an average degree of polymerization of 810) was mixed with a terpene phenol resin (manufactured by Yasuhara Chemical, YS POLYSTER T130) at a ratio of 7:3 (1:0.4), giving powdery cellulose nanofibers.

(Comparative Example 2)

The same procedure as in Example 1 was performed except that an aqueous CNF mixture derived from bamboo pulp (a CNF solid content of 35%, a water content of 65%, an average degree of polymerization of 810) was mixed with a terpene phenol resin (manufactured by Yasuhara Chemical, YS POLYSTER T130) at a ratio of 9:1 (1:0.1), giving powdery cellulose nanofibers.

(Example 3) (not according to the invention)

The powdery cellulose nanofibers prepared in Example 1 were mixed with a polypropylene (manufactured by Prime Polymer, J105G, homoPP, MFR 9) so as to give a CNF content of 5 wt%, and the mixture was fed to a twin-screw extruder (Japan Steel Works, model: TEX25αIII) and melted and kneaded at 210°C, giving pellets. The prepared pellets were dried at 80°C for 12 hours and then were injection molded with an injection molding machine (manufactured by Nissei Plastic Industrial, model: NPX7-IF) at a cylinder temperature of 190°C and a mold temperature of 50°C, giving strip specimens and dumbbell specimens 1BA.
The prepared specimens were used to evaluate properties by various tests, and the results are shown in Table 2.

(Example 4) (not according to the invention)

The powdery cellulose nanofibers prepared in Example 1 were mixed with a polypropylene (manufactured by Prime Polymer, J105G, homoPP, MFR 9) so as to give a CNF content of 10 wt%, and the mixture was fed to a twin-screw extruder (Japan Steel Works, model: TEX25αIII) and melted and kneaded at 210°C, giving pellets. The prepared pellets

were dried at 80°C for 12 hours and then were injection molded with an injection molding machine (manufactured by Nissei Plastic Industrial, model: NPX7-IF) at a cylinder temperature of 190°C and a mold temperature of 50°C, giving strip specimens and dumbbell specimens 1BA.

(Comparative Example 3)

The powdery cellulose nanofibers prepared in Comparative Example 1 were mixed with a polypropylene (manufactured by Prime Polymer, J105G, homoPP, MFR 9) so as to give a CNF content of 5 wt%, and the mixture was fed to a twin-screw extruder (Japan Steel Works, model: TEX25αIII) and melted and kneaded at 210°C, giving pellets. The prepared pellets were dried at 80°C for 12 hours and then were injection molded with an injection molding machine (manufactured by Nissei Plastic Industrial, model: NPX7-IF) at a cylinder temperature of 190°C and a mold temperature of 50°C, giving strip specimens and dumbbell specimens 1BA.

(Comparative Example 4)

The powdery cellulose nanofibers prepared in Comparative Example 1 were mixed with a polypropylene (manufactured by Prime Polymer, J105G, homoPP, MFR 9) so as to give a CNF content of 10 wt%, and the mixture was fed to a twin-screw extruder (Japan Steel Works, model: TEX25αIII) and melted and kneaded at 210°C, giving pellets. The prepared pellets were dried at 80°C for 12 hours and then were injection molded with an injection molding machine (manufactured by Nissei Plastic Industrial, model: NPX7-IF) at a cylinder temperature of 190°C and a mold temperature of 50°C, giving strip specimens and dumbbell specimens 1BA.

(Comparative Example 5)

The same procedure as in Example 3 was performed except that only a polypropylene (manufactured by Prime Polymer, J105G, homoPP, MFR 9) was used, giving strip specimens and dumbbell specimens 1BA.

(Example 5)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 7:3 (1:0.4), and the resulting mixture was further mixed with a thermoplastic elastomer at a ratio of 75:25.

Next, the prepared mixture was fed to a twin-screw extruder (Japan Steel Works, model: TEX25αIII) to give powdery cellulose nanofibers. The used screws had Φ25 mm, and the resin temperature was set at 135°C.

(Example 6)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 7:3 (1:0.4), and the resulting mixture was further mixed with a thermoplastic elastomer at a ratio of 88:12.

Next, the prepared mixture was fed to a twin-screw extruder (Japan Steel Works, model: TEX25αIII) to give powdery cellulose nanofibers. The used screws had Φ25 mm, and the resin temperature was set at 135°C.

(Example 7)

A mechanohybrid (NIPPON COKE & ENGINEERING, model: MMH-75B/I) was used to mix an aqueous CNF mixture derived from softwood pulp (a CNF solid content of 35%, a water content of 65%, an average degree of polymerization of 720) with a styrenic polymer (manufactured by Yasuhara Chemical, YS RESIN SX100) at a ratio of 7:3 (1:0.4).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 135°C.

(Example 8)

A mechanohybrid (NIPPON COKE & ENGINEERING, model: MMH-75B/I) was used to mix an aqueous CNF

mixture derived from bamboo pulp (a CNF solid content of 35%, a water content of 65%, an average degree of polymerization of 810), a styrenic polymer (manufactured by Yasuhara Chemical, YS RESIN SX100), a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP) at a ratio of 45:19:22:7:7 (% by mass).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 140°C.

(Example 9)

A mechanohybrid (NIPPON COKE & ENGINEERING, model: MMH-75B/I) was used to mix an aqueous CNF mixture derived from hardwood pulp (a CNF solid content of 35%, a water content of 65%, an average degree of polymerization of 800) and a styrenic polymer (manufactured by Yasuhara Chemical, YS RESIN SX100) at a ratio of 7:3 (1:0.4).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 135°C.

(Example 10)

A mechanohybrid (NIPPON COKE & ENGINEERING, model: MMH-75B/I) was used to mix an aqueous CNF mixture derived from hardwood pulp (a CNF solid content of 35%, a water content of 65%, an average degree of polymerization of 800), a styrenic polymer (manufactured by Yasuhara Chemical, YS RESIN SX100), a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP) at a ratio of 45:19:22:7:7 (% by mass).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 140°C.

(Measurement of physical properties)

To determine strength properties of each polyolefin resin composition produced by mixing, measurement of bending strength (bending elastic modulus, bending stress) and measurement of tensile strength (tensile elastic modulus, tensile stress, tensile strain) were performed. In each measurement, a compact tabletop tester (manufactured by Shimadzu Corporation, model: Ex-LX) was used. In the bending strength measurement, a strip specimen was used at a bending speed of 2.0 mm/min, and in the tensile strength measurement, a dumbbell specimen 1BA was used at a tensile speed of 10 mm/min.

(Charpy impact test)

In accordance with JIS K7111-1: 2012, a digital impact tester (Toyo Seiki Seisaku-sho, model: DG-VB2, a hammer capacity of 4.0 J) was used to perform impact test.

(Yellowness evaluation of powdery cellulose nanofibers)

The powdery cellulose nanofibers produced in Examples 1, 2, 5, 6, 7, 8, 9, and 10 and Comparative Examples 1 and 2 were subjected to yellowness measurement and yellowing degree evaluation in accordance with JIS K 7373 by using a color difference meter (manufactured by Nippon Denshoku Industries, model: ZE6000, light source: C/2). In the measurement, powdery CNFs were appropriately packed in a round cell for powder without voids, and measurement was repeated three times for each sample.

From the tristimulus values, X, Y, and Z, determined by the above measurement, a yellowness (YI0) was calculated in accordance with the following formula.

$$YI = 100(1.2769X - 1.0592Z)/Y$$

Next, in the yellowing degree evaluation (ΔYI), the yellowness (YI0) of an aqueous cellulose nanofiber mixture (a

CNF solid content of 35%, a water content of 65%) used to prepare powdery cellulose nanofibers was calculated in accordance with the above formula from the tristimulus values, X, Y, and Z, and each ΔYI was calculated on the basis of the yellowness in accordance with the following formula.

$$\Delta YI = YI - YI0$$

(Yellowness evaluation of resin composition)

The resin compositions produced in Examples 3 and 4 and Comparative Examples 3 and 4 were subjected to yellowness measurement and yellowing degree evaluation in accordance with JIS K 7373 by using a color difference meter (manufactured by Nippon Denshoku Industries, model: ZE6000, light source: C/2).

From the tristimulus values, X, Y, and Z, determined by the above measurement, a yellowness (YI) was calculated in accordance with the following formula. In the measurement, after 1 g of a composition was used to prepare a sheet (a thickness of 0.2 mm), five sheets were stacked, and three sheets of copy paper were further stacked thereon.

$$YI = 100(1.2769X - 1.0592Z)/Y$$

Next, in the yellowing degree evaluation (ΔYI), after 1 g of a base resin used to prepare a composite resin was used to prepare a sheet, five sheets were stacked, and five sheets of copy paper were further stacked thereon. The yellowness was calculated in accordance with the above formula from the tristimulus values, X, Y, and Z, and each ΔYI was calculated on the basis of the yellowness in accordance with the following formula.

$$\Delta YI = YI - YI0$$

The results are shown in Table 1, Table 2, Table 3, and Table 4. Table 2 reveals that each example exhibits good bending elastic modulus (MPa), bending stress (MPa), tensile elastic modulus (MPa), tensile stress (MPa), and tensile strain (%). Table 1, Table 2, Table 3, and Table 4 reveal that each example exhibits a lower yellowing degree, and discoloration is suppressed.

[Table 1]

| | Example 1 | Example 2 | Comparative Example 1 | Comparative Example 2 | YI0 (CNF) |
|---|---|---|---|---|---|
| CNF (BB) | 1 | 1 | 1 | 1 | - |
| YS RESIN SX100 | 0.4 | 0.1 | - | - | - |
| YS POLYSTER T130 | - | - | 0.4 | 0.1 | - |
| YI | 24.93 | 10.22 | 51.16 | 39.34 | 13.27 |
| X | 77.72 | 87.95 | 65.36 | 67.85 | 74.53 |
| Y | 79.1 | 89.81 | 65.91 | 67.91 | 76.59 |
| Z | 75.08 | 97.36 | 46.96 | 56.57 | 80.25 |
| ΔYI | 11.65 | -3.05 | 37.89 | 26.07 | - |

[Table 2]

| | Example 3 | Example 4 | Comparative Example 3 | Comparative Example 4 | Comparative Example 5 |
|---|---|---|---|---|---|
| Powdered CNFs (Example 1) | 5 | 10 | - | - | - |
| Powdered CNFs (Comparative Example 1) | - | - | 5 | 10 | - |
| PP | 95 | 90 | 95 | 90 | 100 |
| YI | 21.25 | 33.95 | 43.71 | 63.18 | 7.96 |

(continued)

| | Example 3 | Example 4 | Comparative Example 3 | Comparative Example 4 | Comparative Example 5 |
|---|---|---|---|---|---|
| X | 67.78 | 68.4 | 54.23 | 51.88 | 56.56 |
| Y | 69.28 | 69.28 | 54.66 | 51.19 | 57.28 |
| Z | 67.81 | 60.25 | 42.82 | 32.01 | 63.88 |
| ΔYI | 13.29 | 25.99 | 35.75 | 55.22 | - |
| Bending elastic modulus (MPa) | 2006 | 2191 | 1954 | 2202 | 1543 |
| Bending stress (MPa) | 47.7 | 49.5 | 44.3 | 47.2 | 42.00 |
| Tensile elastic modulus (MPa) | 2590 | 2209 | 2002 | 2183 | 1917 |
| Tensile yield stress (MPa) | 33.43 | 34.24 | 33.15 | 33.97 | 32.35 |
| Tensile yield strain (%) | 4.54 | 3.53 | 4.99 | 3.46 | 7.53 |
| Charpy impact test ($KJ/m^2$) | 2.05 | 2.08 | 2.04 | 1.35 | 2.52 |

[Table 3]

| | Example 5 | Example 6 |
|---|---|---|
| CNFs:YS RESIN SX100 (1:0.4) | 75 | 88 |
| Thermoplastic elastomer | 25 | 12 |
| YI | 21.52 | 23.83 |
| X | 77.02 | 77.43 |
| Y | 78.63 | 78.78 |
| Z | 76.88 | 75.61 |
| ΔYI | 8.24 | 10.57 |

[Table 4]

| | Example 7 | Example 8 | Example 9 | Example 10 |
|---|---|---|---|---|
| CNF (LB) | 1 | 45 | - | - |
| CNF (NB) | - | - | 1 | 45 |
| YS RESIN SX100 | 0.4 | 19 | 0.4 | 19 |
| Tuftec H1052 | - | 22 | - | 22 |
| Chirabasol P-4 | - | 7 | - | 7 |
| Kayabrid 002PP | - | 7 | - | 7 |
| YI | 29.48 | 26.85 | 38.02 | 26.2 |
| X | 72.47 | 68.04 | 67.46 | 70.01 |
| Y | 73.18 | 69.34 | 67.51 | 71.5 |
| Z | 67 | 64.45 | 57.09 | 66.71 |
| ΔYI | 16.21 | 13.58 | 24.74 | 12.93 |

(Example 11)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 70:30 (% by mass).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Japan Polypropylene, BC04BW, injection molding grade, MFR 5) at such a ratio as to give a cellulose nanofiber content of 10% by mass in the resulting composition, and the mixture was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 170°C and a mold temperature of 80°C, giving strip specimens and multipurpose specimens A1.

Next, the prepared specimens were used to perform physical property measurements. The measurement results and the used amounts are shown in Table 5.

(Example 12)

Physical property measurements were performed in the same manner as in Example 11 except that the aqueous CNF mixture derived from bamboo pulp and the styrenic polymer in Example 11 were mixed at a ratio of 90:10 (% by mass).

(Example 13)

Physical property measurements were performed in the same manner as in Example 11 except that the aqueous CNF mixture derived from bamboo pulp and the styrenic polymer in Example 11 were mixed at a ratio of 95:5 (% by mass).

(Example 14)

Physical property measurements were performed in the same manner as in Example 11 except that the aqueous CNF mixture derived from bamboo pulp, the styrenic polymer in Example 11, and a surfactant (manufactured by Taiyo Kagaku, product name: Chirabasol P-4) were mixed at a ratio of 90:5:5 (% by mass).

(Comparative Example 6)

A polypropylene (manufactured by Japan Polypropylene, BC04BW, injection molding grade, MFR 5) was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 170°C and a mold temperature of 80°C, giving strip specimens and multipurpose specimens A1.

[Table 5]

| | | Example 11 | Example 12 | Example 13 | Example 14 | Comparative Example 6 |
|---|---|---|---|---|---|---|
| Melt mixture | CNF | 70 | 90 | 95 | 90 | - |
| | YS RESIN SX-100 | 30 | 10 | 5 | 5 | - |
| | Chirabasol P-4 | - | - | - | 5 | - |
| | Total amount | 100 | 100 | 100 | 100 | - |

(continued)

| | | Example 11 | Example 12 | Example 13 | Example 14 | Comparative Example 6 |
|---|---|---|---|---|---|---|
| Composition | PP BC04BW (MFR 5.0) | 85.71 | 88.89 | 89.47 | 88.89 | 100 |
| | CNF | 10.00 | 10.00 | 10.00 | 10.00 | - |
| | YS RESIN SX-100 | 4.29 | 1.11 | 0.53 | 0.56 | - |
| | Chirabasol P-4 | - | - | - | 0.56 | - |
| | Total amount | 100.00 | 100.00 | 100.00 | 100.00 | 100 |
| Molding temperature | Cylinder (°C) | 170 | 170 | 170 | 170 | 170 |
| | Mold (°C) | 80 | 80 | 80 | 80 | 80 |
| Physical property values | Bending elastic modulus (MPa) | 1674 | 1610 | 1609 | 1637 | 1296 |
| | Bending stress (MPa) | 40.00 | 39.09 | 38.55 | 38.89 | 36.42 |
| | Tensile elastic modulus (MPa) | 1917 | 1842 | 1781 | 1791 | 1550 |
| | Tensile yield stress (MPa) | 25.23 | 24.94 | 24.64 | 24.81 | 25.36 |
| | Tensile yield strain (%) | 3.61 | 4.32 | 4.30 | 5.10 | 5.17 |

Table 5 reveals that each example exhibits a higher bending elastic modulus and a higher tensile elastic modulus than the comparative example.

(Example 15)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810), a styrenic polymer (manufactured by Yasuhara Chemical, YS RESIN SX100), a thermoplastic elastomer (manufactured by Dow Chemical Company, product name: ENGAGE 8842), a surfactant (manufactured by Taiyo Kagaku, product name: Chirabasol P-4), and a compatibilizer (manufactured by Kayaku Nouryon, product name: Kayabrid 002PP) at a ratio of 43:19:23:5:10 (% by mass).

Next, the prepared mixture was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Prime Polymer, J707G, homoPP, MFR 30) at such a ratio as to give a cellulose nanofiber content of 10% by mass in the resulting composition, and the mixture was fed to a twin-screw extruder (Japan Steel Works, model: TEX25αIII) and melted and kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving strip specimens and multipurpose specimens A1.

Next, the prepared specimens were used to perform physical property measurements. The measurement results and the used amounts are shown in Table 6.

(Example 16)

Physical property measurements were performed in the same manner as in Example 15 except that a thermoplastic elastomer (manufactured by Asahi Kasei, product name: Tuftec H1052) was used in place of the thermoplastic elastomer (manufactured by Dow Chemical Company, product name: ENGAGE 8842) in Example 15.

(Example 17)

Physical property measurements were performed in the same manner as in Example 15 except that a thermoplastic elastomer (manufactured by Asahi Kasei, product name: Tuftec H1052) and a thermoplastic elastomer (manufactured by Dow Chemical Company, product name: ENGAGE 8842) were used in place of the thermoplastic elastomer (manufactured by Dow Chemical Company, product name: ENGAGE 8842) in Example 15, and the mass ratio was set at 43:19:11.5:11.5:5:10.

(Comparative Example 7)

A polypropylene (manufactured by Prime Polymer, J707G, homoPP, MFR 30) was fed to a twin-screw extruder (Japan Steel Works, model: TEX25αIII) and melted and kneaded at 175°C, giving pellets.
The prepared pellets were dried at 80°C for 12 hours and then were injection molded with a vacuum injection molding machine (manufactured by Sodick, model: MS100) at a cylinder temperature of 190°C and a mold temperature of 50°C, giving strip specimens and multipurpose specimens A1.

[Table 6]

| | | Example 15 | Example 16 | Example 17 | Comparative Example 7 |
|---|---|---|---|---|---|
| Melt mixture | CNF | 43 | 43 | 43 | - |
| | YS RESIN SX-100 | 19 | 19 | 19 | - |
| | ENGAGE8842 | 23 | - | 11.5 | - |
| | Tuftec H1052 | - | 23 | 11.5 | - |
| | Chirabasol P-4 | 5 | 5 | 5 | - |
| | Kayabrid 002PP | 10 | 10 | 10 | - |
| | Total amount | 100 | 100 | 100 | - |
| Composition | PP J707G (MFR 30) | 76.74 | 76.74 | 76.74 | 100.00 |
| | CNF | 10.00 | 10.00 | 10.00 | - |
| | YS RESIN SX-100 | 4.42 | 4.42 | 4.42 | - |
| | ENGAGE8842 | 5.35 | - | 2.67 | - |
| | Tuftec H1052 | - | 5.35 | 2.67 | - |
| | Chirabasol P-4 | 1.16 | 1.16 | 1.16 | - |
| | Kayabrid 002PP | 2.33 | 2.33 | 2.33 | - |
| | Total amount | 100.00 | 100.00 | 100.00 | 100.00 |
| Molding temperature | Cylinder (°C) | 190 | 190 | 190 | 190 |
| | Mold (°C) | 50 | 50 | 50 | 50 |
| Physical property values | Bending elastic modulus (MPa) | 1437 | 1260 | 1307 | 1190 |
| | Bending stress (MPa) | 35.1 | 30.63 | 31.5 | 33.66 |
| | Tensile elastic modulus (MPa) | 1552 | 1426 | 1433 | 1293 |
| | Tensile yield stress (MPa) | 22.91 | 21.83 | 22.3 | 22.72 |
| | Tensile yield strain (%) | 5.47 | 8.13 | 7.36 | 6.49 |

Table 6 reveals that each example exhibits a higher bending elastic modulus and a higher tensile elastic modulus than the comparative example.

(Example 18)

A mechanohybrid (NIPPON COKE & ENGINEERING, model: MMH-75B/I) was used to mix an aqueous CNF

mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 70:30 (% by mass).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Prime Polymer, J707G, homoPP, MFR 30) at such a ratio as to give a cellulose nanofiber content of 10% by mass in the resulting composition, and the mixture was fed to a twin-screw extruder (Japan Steel Works, model: TEX25αIII) and melted and kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving strip specimens and multipurpose specimens A1.

Next, the prepared specimens were used to perform physical property measurements. The measurement results and the used amounts are shown in Table 7.

(Example 19)

Physical property measurements were performed in the same manner as in Example 18 except that an aqueous CNF mixture derived from bamboo pulp, a styrenic polymer, a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP) were mixed at a ratio of 47:15:23.5:4.9:9.6 (% by mass) in place of the aqueous CNF mixture derived from bamboo pulp and the styrenic polymer in Example 18.

(Example 20)

Physical property measurements were performed in the same manner as in Example 18 except that an aqueous CNF mixture derived from bamboo pulp, a styrenic polymer (manufactured by Yasuhara Chemical, YS RESIN SX100), a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP) were mixed at a ratio of 50:10:25:5:10 (% by mass) in place of the aqueous CNF mixture derived from bamboo pulp and the styrenic polymer in Example 18.

(Example 21)

Physical property measurements were performed in the same manner as in Example 18 except that an aqueous CNF mixture derived from bamboo pulp, a styrenic oligomer (manufactured by Yasuhara Chemical, YS RESIN SX100), a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP) were mixed at a ratio of 51.9:7:25.8:5.1:10.2 (% by mass) in place of the aqueous CNF mixture derived from bamboo pulp and the styrenic polymer in Example 18.

(Comparative Example 8)

A polypropylene (manufactured by Prime Polymer, J707G, homoPP, MFR 30) was fed to a twin-screw extruder (Japan Steel Works, model: TEX25αIII) and melted and kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving strip specimens and multipurpose specimens A1.

(Example 22)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810), a styrenic polymer (manufactured by Yasuhara Chemical, YS RESIN SX100), a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP)

at a ratio of 43:19:23:5:10 (% by mass).

Next, the prepared mixture was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Japan Polypropylene, BC04BW, injection molding grade, MFR 5) at such a ratio as to give a cellulose nanofiber content of 10% by mass in the resulting composition, and the mixture was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 180°C and a mold temperature of 80°C, giving strip specimens and multipurpose specimens A1.

Next, the prepared specimens were used to perform physical property measurements. The measurement results and the used amounts are shown in Table 7.

(Example 23)

Physical property measurements were performed in the same manner as in Example 22 except that a thermoplastic elastomer (manufactured by Asahi Kasei, product name: Tuftec H1062) was used in place of the thermoplastic elastomer (manufactured by Asahi Kasei, product name: Tuftec H1052) in Example 22.

(Example 24)

Physical property measurements were performed in the same manner as in Example 22 except that a thermoplastic elastomer (manufactured by Dow Chemical Company, product name: ENGAGE 8842) was used in place of the thermoplastic elastomer (manufactured by Asahi Kasei, product name: Tuftec H1052) in Example 22.

(Example 25)

Physical property measurements were performed in the same manner as in Example 22 except that a thermoplastic elastomer (manufactured by Mitsui Chemicals, product name: TAFMER DF610) was used in place of the thermoplastic elastomer (manufactured by Asahi Kasei, product name: Tuftec H1052) in Example 22.

(Example 26)

Physical property measurements were performed in the same manner as in Example 22 except that a thermoplastic elastomer (manufactured by Mitsui Chemicals, product name: TAFMER DF811) was used in place of the thermoplastic elastomer (manufactured by Asahi Kasei, product name: Tuftec H1052) in Example 22.

(Comparative Example 9)

A polypropylene (manufactured by Japan Polypropylene, BC04BW, injection molding grade, MFR 5) was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 180°C and a mold temperature of 80°C, giving strip specimens and multipurpose specimens A1.

[Table 7]

| | | Example 18 | Example 19 | Example 20 | Example 21 | Comparative Example 8 | Example 22 | Example 23 | Example 24 | Example 25 | Example 26 | Comparative Example 9 |
|---|---|---|---|---|---|---|---|---|---|---|---|---|
| Melt mixture | CNF | 70 | 47 | 50 | 51.9 | - | 43 | 43 | 43 | 43 | 43 | - |
| | YS RESIN SX-100 | 30 | 15 | 10 | 7 | - | 19 | 19 | 19 | 19 | 19 | - |
| | ENGAGE8842 | - | - | - | - | - | - | - | 23 | - | - | - |
| | TAFMER DF610 | - | - | - | - | - | - | - | - | 23 | - | - |
| | TAFMER DF811 | - | - | - | - | - | - | - | - | - | 23 | - |
| | Tuftec H1052 | - | 23.5 | 25 | 25.8 | - | 23 | - | - | - | - | - |
| | Tuftec H1062 | - | - | - | - | - | - | 23 | - | - | - | - |
| | Chirabasol P-4 | - | 4.9 | 5 | 5.1 | - | 5 | 5 | 5 | 5 | 5 | - |
| | Kayabrid 002PP | - | 9.6 | 10 | 10.2 | - | 10 | 10 | 10 | 10 | 10 | - |
| | Total amount | 100 | 100 | 100 | 100 | - | 100 | 100 | 100 | 100 | 100 | - |

(continued)

| | | Example 18 | Example 19 | Example 20 | Example 21 | Comparative Example 8 | Example 22 | Example 23 | Example 24 | Example 25 | Example 26 | Comparative Example 9 |
|---|---|---|---|---|---|---|---|---|---|---|---|---|
| Composition | PP J707G (MFR 30) | 85.71 | 78.72 | 80.00 | 80.73 | 100.00 | - | - | - | - | - | - |
| | PP BC4BW (MFR 5.0) | - | - | - | - | - | 76.74 | 76.74 | 76.74 | 76.74 | 76.74 | 100.00 |
| | CNF | 10.00 | 10.00 | 10.00 | 10.00 | - | 10.00 | 10.00 | 10.00 | 10.00 | 10.00 | - |
| | YS RESIN SX-100 | 4.29 | 3.19 | 2.00 | 1.35 | - | 4.42 | 4.42 | 4.42 | 4.42 | 4.42 | - |
| | ENGAGE8842 | - | - | - | - | - | - | - | 5.35 | - | - | - |
| | TAFMER DF610 | - | - | - | - | - | - | - | - | 5.35 | - | - |
| | TAFMER DF811 | - | - | - | - | - | - | - | - | - | 5.35 | - |
| | Tuftec H1052 | - | 5.00 | 5.00 | 4.97 | - | 5.35 | - | - | - | - | - |
| | Tuftec H1062 | - | - | - | - | - | - | 5.35 | - | - | - | - |
| | Chirabasol P-4 | - | 1.04 | 1.00 | 0.98 | - | 1.16 | 1.16 | 1.16 | 1.16 | 1.16 | - |
| | Kayabrid 002PP | - | 204 | 2.00 | 1.97 | - | 2.33 | 2.33 | 2.33 | 2.33 | 2.33 | - |
| | Total amount | 100.00 | 100.00 | 100.00 | 100.00 | 100.00 | 100.00 | 100.00 | 100.00 | 100.00 | 100.00 | 100.00 |
| Molding temperature | Cylinder (°C) | 190 | 190 | 190 | 190 | 190 | 180 | 180 | 180 | 180 | 180 | 180 |
| | Mold (°C) | 50 | 50 | 50 | 50 | 50 | 80 | 80 | 80 | 80 | 80 | 80 |

(continued)

| | | Example 18 | Example 19 | Example 20 | Example 21 | Comparative Example 8 | Example 22 | Example 23 | Example 24 | Example 25 | Example 26 | Comparative Example 9 |
|---|---|---|---|---|---|---|---|---|---|---|---|---|
| Physical property values | Bending elastic modulus (MPa) | 1716 | 1232 | 1306 | 1333 | 1185 | 1290 | 1300 | 1476 | 1480 | 1504 | 1357 |
| | Bending stress (MPa) | 36.69 | 29.7 | 32.15 | 32.07 | 32.89 | 31.82 | 31.87 | 36.87 | 37.12 | 37.44 | 37.39 |
| | Tensile elastic modulus (MPa) | 1860 | 1502 | 1525 | 1487 | 1331 | 1476 | 1557 | 1720 | 1673 | 1737 | 1489 |
| | Tensile yield stress (MPa) | 21.46 | 21.61 | 23.05 | 23.12 | 22.61 | 25.37 | 26.12 | 27.28 | 27.2 | 27.07 | 24.72 |
| | Tensile yield strain (%) | 2.97 | 8.11 | 7.79 | 7.78 | 6.58 | 10.46 | 11.76 | 9.03 | 8.46 | 8.57 | 5.27 |

Table 7 reveals that each example exhibits a higher bending elastic modulus and a higher tensile elastic modulus than the comparative examples.

(Example 27)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 70:30 (% by mass).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Japan Polypropylene, BC04BW, injection molding grade, MFR 5) at such a ratio as to give a cellulose nanofiber content of 10% by mass in the resulting composition, and the mixture was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 180°C and a mold temperature of 80°C, giving strip specimens and multipurpose specimens A1.

Next, the prepared specimens were used to perform physical property measurements. The measurement results and the used amounts are shown in Table 8.

(Example 28)

Physical property measurements were performed in the same manner as in Example 27 except that 0.05% by mass of a crystal nucleating agent (manufactured by New Japan Chemical, product name: NU-100) was added to the prepared powdery cellulose nanofibers and the polypropylene in Example 27.

(Example 29)

Physical property measurements were performed in the same manner as in Example 27 except that 0.25% by mass of a crystal nucleating agent (manufactured by New Japan Chemical, product name: NU-100) was added to the prepared powdery cellulose nanofibers and the polypropylene in Example 27.

(Example 30)

Physical property measurements were performed in the same manner as in Example 27 except that 0.50% by mass of a crystal nucleating agent (manufactured by New Japan Chemical, product name: NU-100) was added to the prepared powdery cellulose nanofibers and the polypropylene in Example 27.

(Comparative Example 10)

A polypropylene (manufactured by Japan Polypropylene, BC04BW, injection molding grade, MFR 5) was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 180°C and a mold temperature of 80°C, giving strip specimens and multipurpose specimens A1.

(Example 31)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 70:30 (% by mass).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Japan

Polypropylene, BC04BW, injection molding grade, MFR 5) at such a ratio as to give a cellulose nanofiber content of 10% by mass in the resulting composition, and the mixture was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 170°C and a mold temperature of 80°C, giving strip specimens and multipurpose specimens A1.

Next, the prepared specimens were used to perform physical property measurements. The measurement results and the used amounts are shown in Table 8.

(Example 32)

Physical property measurements were performed in the same manner as in Example 31 except that 0.05% by mass of a crystal nucleating agent (manufactured by New Japan Chemical, product name: NU-100) was added to the prepared powdery cellulose nanofibers and the polypropylene in Example 31.

(Example 33)

Physical property measurements were performed in the same manner as in Example 31 except that 0.1% by mass of a crystal nucleating agent (manufactured by New Japan Chemical, product name: NU-100) was added to the prepared powdery cellulose nanofibers and the polypropylene in Example 31.

(Example 34)

Physical property measurements were performed in the same manner as in Example 31 except that 0.20% by mass of a crystal nucleating agent (manufactured by New Japan Chemical, product name: NU-100) was added to the prepared powdery cellulose nanofibers and the polypropylene in Example 31, and the cylinder temperature was set at 175°C.

(Example 35)

Physical property measurements were performed in the same manner as in Example 31 except that 0.30% by mass of a crystal nucleating agent (manufactured by New Japan Chemical, product name: NU-100) was added to the prepared powdery cellulose nanofibers and the polypropylene in Example 31, and the cylinder temperature was set at 175°C.

(Comparative Example 11)

A polypropylene (manufactured by Japan Polypropylene, BC04BW, injection molding grade, MFR 5) was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 170°C and a mold temperature of 80°C, giving strip specimens and multipurpose specimens A1.

(Comparative Example 12)

Physical property measurements were performed in the same manner as in Comparative Example 11 except that a polypropylene and a crystal nucleating agent (manufactured by New Japan Chemical, product name: NU-100) were mixed at a mass ratio of 99.95:0.05 in place of the polypropylene in Comparative Example 11.

(Comparative Example 13)

Physical property measurements were performed in the same manner as in Comparative Example 11 except that a polypropylene and a crystal nucleating agent (manufactured by New Japan Chemical, product name: NU-100) were mixed at a mass ratio of 99.85:0.15 in place of the polypropylene in Comparative Example 11.

(Comparative Example 14)

Physical property measurements were performed in the same manner as in Comparative Example 11 except that

a polypropylene and a crystal nucleating agent (manufactured by New Japan Chemical, product name: NU-100) were mixed at a mass ratio of 99.70:0.3 in place of the polypropylene in Comparative Example 11.

[Table 8]

| | | Example 27 | Example 28 | Example 29 | Example 30 | Comparative Example 10 | Example 31 | Example 32 | Example 33 | Example 34 | Example 35 | Comparative Example 11 | Comparative Example 12 | Comparative Example 13 | Comparative Example 14 |
|---|---|---|---|---|---|---|---|---|---|---|---|---|---|---|---|
| Melt mixture | CNF | 70 | 70 | 70 | 70 | - | 70 | 70 | 70 | 70 | 70 | - | - | - | - |
| | YS RESIN SX-100 | 30 | 30 | 30 | 30 | - | 30 | 30 | 30 | 30 | 30 | - | - | - | - |
| | Total amount | 100 | 100 | 100 | 100 | - | 100 | 100 | 100 | 100 | 100 | - | - | - | - |
| Composition | PP BC4BW (MFR 5.0) | 85.71 | 85.66 | 85.46 | 85.21 | 100.00 | 85.71 | 85.66 | 85.61 | 85.51 | 85.41 | 100.00 | 99.95 | 99.85 | 99.70 |
| | CNF | 10.00 | 10.00 | 10.00 | 10.00 | - | 10.00 | 10.00 | 10.00 | 10.00 | 10.00 | - | - | - | - |
| | YS RESIN SX-100 | 4.29 | 4.29 | 4.29 | 4.29 | - | 4.29 | 4.29 | 4.29 | 4.29 | 4.29 | - | - | - | - |
| | NU-100 | - | 0.05 | 0.25 | 0.50 | - | - | 0.05 | 0.10 | 0.20 | 0.30 | - | 0.05 | 1.15 | 0.30 |
| | Total amount | 100.00 | 100.00 | 100.00 | 100.00 | 100.00 | 100.00 | 100.00 | 100.00 | 100.00 | 100.00 | 100.00 | 100.00 | 100.00 | 100.00 |
| Molding temperature | Cylinder (°C) | 180 | 180 | 180 | 180 | 180 | 170 | 170 | 170 | 175 | 175 | 170 | 170 | 170 | 170 |
| | Mold (°C) | 80 | 80 | 80 | 80 | 80 | 80 | 80 | 80 | 80 | 80 | 80 | 80 | 80 | 80 |

(continued)

| | | Example 27 | Example 28 | Example 29 | Example 30 | Comparative Example 10 | Example 31 | Example 32 | Example 33 | Example 34 | Example 35 | Comparative Example 11 | Comparative Example 12 | Comparative Example 13 | Comparative Example 14 |
|---|---|---|---|---|---|---|---|---|---|---|---|---|---|---|---|
| Physical property values | Bending elastic modulus (MPa) | 1720 | 1710 | 1715 | 1783 | 1357 | 1708 | 1650 | 1635 | 1716 | 1739 | 1322 | 1386 | 1417 | 1411 |
| | Bending stress (MPa) | 40.07 | 39.9 | 39.6 | 39.54 | 37.39 | 40.5 | 38.81 | 38.35 | 38.73 | 38.56 | 35.92 | 37.74 | 38.59 | 37.93 |
| | Tensile elastic modulus (MPa) | 1816 | 1798 | 1978 | 1995 | 1489 | 2018 | 1933 | 2009 | 1988 | 1930 | 1556 | 1544 | 1559 | 1610 |
| | Tensile yield stress (MPa) | 24.41 | 24.34 | 24.43 | 23.98 | 24.72 | 25.41 | 25.29 | 25.15 | 24.9 | 24.44 | 25.87 | 25.56 | 25.04 | 24.72 |
| | Tensile yield strain (%) | 4.022 | 4.158 | 3.87 | 3.57 | 5.267 | 3.3 | 3.34 | 3.46 | 3.2 | 3.23 | 5.03 | 5.09 | 4.92 | 4.84 |

Table 8 reveals that each example exhibits a higher bending elastic modulus and a higher tensile elastic modulus than the comparative examples.

(Example 36)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810), a styrenic polymer (manufactured by Yasuhara Chemical, YS RESIN SX100), a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP) at a ratio of 45:19:22:7:7 (% by mass).

Next, the prepared mixture of the CNFs and the styrenic polymer was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Japan Polypropylene, BC04BW, injection molding grade, MFR 5) at such a ratio as to give a cellulose nanofiber content of 10% by mass in the resulting composition, and the mixture was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 170°C and a mold temperature of 80°C, giving strip specimens and multipurpose specimens A1.

Next, the prepared specimens were used to perform physical property measurements. The measurement results and the used amounts are shown in Table 9.

(Example 37)

Physical property measurements were performed in the same manner as in Example 36 except that the aqueous CNF mixture derived from bamboo pulp, the styrenic polymer (manufactured by Yasuhara Chemical, YS RESIN SX100), the thermoplastic elastomer (manufactured by Asahi Kasei, product name: Tuftec H1052), the surfactant (manufactured by Taiyo Kagaku, product name: Chirabasol P-4), the compatibilizer (manufactured by Kayaku Nouryon, product name: Kayabrid 002PP) in Example 36, and a crystal nucleating agent (manufactured by New Japan Chemical, product name: NU-100) were mixed at a ratio of 44.1:19:22:7:7:0.9 (% by mass).

(Example 38)

Physical property measurements were performed in the same manner as in Example 36 except that 0.20% by mass of a crystal nucleating agent (manufactured by New Japan Chemical, product name: NU-100) was added to the prepared powdery cellulose nanofibers and the polypropylene in Example 36.

(Example 39)

Physical property measurements were performed in the same manner as in Example 36 except that the aqueous CNF mixture derived from bamboo pulp, the styrenic polymer (manufactured by Yasuhara Chemical, YS RESIN SX100), the thermoplastic elastomer (manufactured by Asahi Kasei, product name: Tuftec H1052), the surfactant (manufactured by Taiyo Kagaku, product name: Chirabasol P-4), the compatibilizer (manufactured by Kayaku Nouryon, product name: Kayabrid 002PP) in Example 36, and a crystal nucleating agent (manufactured by New Japan Chemical, product name: NU-100) were mixed at a ratio of 53:10:22:7:7:1 (% by mass).

(Comparative Example 15)

A polypropylene (manufactured by Japan Polypropylene, BC04BW, injection molding grade, MFR 5) was fed to a twin-screw extruder (Japan Steel Works, model: TEX25αIII) and melted and kneaded at 180°C, giving pellets.

The prepared pellets were dried at 80°C for 12 hours and then were injection molded with a vacuum injection molding machine (manufactured by Sodick, model: MS100) at a cylinder temperature of 170°C and a mold temperature of 80°C, giving strip specimens and multipurpose specimens A1.

[Table 9]

| | | Example 36 | Example 37 | Example 38 | Example 39 | Comparative Example 15 |
|---|---|---|---|---|---|---|
| Melt mixture | CNF | 45 | 44.1 | 45 | 53 | - |
| | YS RESIN SX-100 | 19 | 19 | 19 | 10 | - |
| | Tuftec H1052 | 22 | 22 | 22 | 22 | - |
| | Chirabasol P-4 | 7 | 7 | 7 | 7 | - |
| | Kayabrid 002PP | 7 | 7 | 7 | 7 | - |
| | NU-100 | - | 0.9 | - | 1 | - |
| | Total amount | 100 | 100 | 100 | 100 | 0 |
| Composition | PP BC4BW (MFR 5.0) | 77.78 | 77.32 | 77.58 | 81.13 | 100.00 |
| | CNF | 10.00 | 10.00 | 10.00 | 10.00 | - |
| | YS RESIN SX-100 | 4.22 | 4.31 | 4.22 | 1.89 | - |
| | Tuftec H1052 | 4.89 | 4.99 | 4.89 | 4.15 | - |
| | Chirabasol P-4 | 1.56 | 1.59 | 1.56 | 1.32 | - |
| | Kayabrid 002PP | 1.56 | 1.59 | 1.56 | 1.32 | - |
| | NU-100 | - | 0.20 | 0.20 | 0.19 | - |
| | Total amount | 100.00 | 100.00 | 100.00 | 100.00 | 100.00 |
| Molding temperature | Cylinder (°C) | 170 | 170 | 170 | 170 | 170 |
| | Mold (°C) | 80 | 80 | 80 | 80 | 80 |
| Physical property values | Bending elastic modulus (MPa) | 1459 | 1270 | 1301 | 1422 | 1296 |
| | Bending stress (MPa) | 34.93 | 31.06 | 32.02 | 35.64 | 36.42 |
| | Tensile elastic modulus (MPa) | 1762 | 1609 | 1596 | 1689 | 1550 |
| | Tensile yield stress (MPa) | 27.74 | 25 | 25.92 | 26.38 | 25.36 |
| | Tensile yield strain (%) | 9.37 | 12.29 | 10.63 | 10.52 | 5.17 |

Table 9 reveals that each example exhibits a higher tensile elastic modulus than the comparative example.

(Example 40)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810), a styrenic polymer (manufactured by Yasuhara Chemical, YS RESIN SX100), a metallic soap (manufactured by Nitto Chemical Industry, ZS-6), a thermoplastic elastomer (manufactured by Asahi Kasei, product name: Tuftec H1052), a surfactant (manufactured by Taiyo Kagaku, product name: Chirabasol P-4), a compatibilizer (manufactured by Kayaku Nouryon, product name: Kayabrid 002PP), and a crystal nucleating agent (manufactured by New Japan Chemical, product name: NU-100) at a ratio of 48.1:6.1:6.1:23.5:7.4:7.4:1.4.

Next, the prepared mixture was fed to a twin-screw extruder (Japan Steel Works, model: TEX25$\alpha$III) to give powdery cellulose nanofibers. The used screws had $\Phi$25 mm, and the resin temperature was set at 140°C.

Next, the prepared powdery cellulose nanofibers were mixed with a polypropylene (manufactured by Prime Polymer, J466HP, homoPP, MFR 3.1) at such a ratio as to give a cellulose nanofiber content of 10% by mass in the resulting composition, and the mixture was fed to a twin-screw extruder (Japan Steel Works, model: TEX25$\alpha$III) and melted and

kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving strip specimens and multipurpose specimens A1.

Next, the prepared specimens were used to perform physical property measurements. The measurement results and the used amounts are shown in Table 10.

(Comparative Example 16)

A polypropylene (manufactured by Prime Polymer, J466HP, homoPP, MFR 3.1) was fed to a twin-screw extruder (Japan Steel Works, model: TEX25αIII) and melted and kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving strip specimens and multipurpose specimens A1.

(Example 41)

Physical property measurements were performed in the same manner as in Example 40 except that the cylinder temperature was set at 170°C, and the mold temperature was set at 80°C in place of a cylinder temperature of 190°C and a mold temperature of 50°C in Example 40.

(Comparative Example 17)

Physical property measurements were performed in the same manner as in Comparative Example 16 except that the cylinder temperature was set at 170°C, and the mold temperature was set at 80°C in place of a cylinder temperature of 190°C and a mold temperature of 50°C in Comparative Example 16.

[Table 10]

| | | Example 40 | Comparative Example 16 | Example 41 | Comparative Example 17 |
|---|---|---|---|---|---|
| Melt mixture | CNF | 48.1 | - | 48.1 | - |
| | YS RESIN SX-100 | 6.1 | - | 6.1 | - |
| | Metallic soap ZS-6 | 6.1 | - | 6.1 | - |
| | Tuftec H1052 | 23.5 | - | 23.5 | - |
| | Chirabasol P-4 | 7.4 | - | 7.4 | - |
| | Kayabrid 002PP | 7.4 | - | 7.4 | - |
| | NU-100 | 1.4 | - | 1.4 | - |
| | Total amount | 100 | - | 100 | - |
| Composition | PP J466HP (MFR 3.1) | 79.21 | 100.00 | 79.21 | 100.00 |
| | CNF | 10.00 | - | 10.00 | - |
| | YS RESIN SX-100 | 1.27 | - | 1.27 | - |
| | Metallic soap ZS-6 | 1.27 | - | 1.27 | - |
| | Tuftec H1052 | 4.89 | - | 4.89 | - |
| | Chirabasol P-4 | 1.54 | - | 1.54 | - |
| | Kayabrid 002PP | 1.54 | - | 1.54 | - |
| | NU-100 | 0.29 | - | 0.29 | - |
| | Total amount | 100.00 | 100.00 | 100.00 | 100.00 |
| Molding temperature | Cylinder (°C) | 190 | 190 | 170 | 170 |
| | Mold (°C) | 50 | 50 | 80 | 80 |

(continued)

| | | Example 40 | Comparative Example 16 | Example 41 | Comparative Example 17 |
|---|---|---|---|---|---|
| Physical property values | Bending elastic modulus (MPa) | 948 | 785 | 1054 | 1206 |
| | Bending stress (MPa) | 22.93 | 22.1 | 24.49 | 19.49 |
| | Tensile elastic modulus (MPa) | 1206 | 1103 | 1220 | 948 |
| | Tensile yield stress (MPa) | 19.49 | 20.37 | 19.83 | 22.93 |
| | Tensile yield strain (%) | 9.91 | 7.79 | 10 | 6.97 |

Table 10 reveals that each example exhibits a higher tensile elastic modulus than the comparative examples.

(Puncture impact test)

(Example 42)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810), a styrenic polymer (manufactured by Yasuhara Chemical, YS RESIN SX100), a thermoplastic elastomer (manufactured by Asahi Kasei, product name: Tuftec H1052), a surfactant (manufactured by Taiyo Kagaku, product name: Chirabasol P-4), and a compatibilizer (manufactured by Kayaku Nouryon, product name: Kayabrid 002PP) at a ratio of 45:19:22:7:7 (% by mass).

Next, the prepared mixture was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Japan Polypropylene, BC04BW, injection molding grade, MFR 5) at such a ratio as to give a cellulose nanofiber content of 30% by mass in the resulting composition, and the mixture was fed to a twin-screw extruder (Japan Steel Works, model: TEX25αIII) and melted and kneaded at 180°C, giving pellets.

Next, the resulting pellets were mixed with a polypropylene (manufactured by Japan Polypropylene, BC04BW, injection molding grade, MFR 5) at such a ratio as to give a cellulose nanofiber content of 5% by mass in the resulting composition, and the mixture was fed to a twin-screw extruder (Japan Steel Works, model: TEX25αIII) and melted and kneaded at 180°C, giving pellets.

Next, an injection molding machine was used to give a 158 mm × 120 mm × 3.7 mmt flat plate. The flat plate was subjected to puncture impact test in accordance with JIS K7211-2 with a puncture impact tester (manufactured by Shimadzu Corporation, model: HITS-P10) at a test temperature of 25°C in conditions of a striker diameter of Φ10 mm, a support diameter of ϕ100 mm, and a punching speed of 4.4 m/sec, and fracture morphology was evaluated.

Fracture morphology YD is a yield caused by deep drawing; fracture morphology YS is a yield caused by stable crack growing; fracture morphology YU is a yield caused by unstable crack growing; and fracture morphology NY is a fracture caused by unstable crack growing but not yielded. The test results are show in Table 11, Table 12, and FIG. 7 to FIG. 10.

(Example 43)

Puncture impact test was performed to evaluate fracture morphology in the same manner as in Example 42 except that the pellets produced in Example 42 were mixed with a polypropylene (manufactured by Japan Polypropylene, BC04BW, injection molding grade, MFR 5) at such a ratio as to give a cellulose nanofiber content of 10% by mass in the resulting composition.

(Example 44)

Puncture impact test was performed to evaluate fracture morphology in the same manner as in Example 42 except that the pellets produced in Example 42 were mixed with a polypropylene (manufactured by Japan Polypropylene, BC04BW, injection molding grade, MFR 5) at such a ratio as to give a cellulose nanofiber content of 15% by mass in the resulting composition.

(Comparative Example 18)

A polypropylene (manufactured by Japan Polypropylene, BC04BW, injection molding grade, MFR 5) was fed to a twin-screw extruder (Japan Steel Works, model: TEX25αIII) and melted and kneaded at 190°C, giving pellets.

Next, an injection molding machine was used to give a 158 mm × 120 mm × 3.7 mmt flat plate. The flat plate was subjected to puncture impact test in accordance with JIS K7211-2 with a puncture impact tester (manufactured by Shimadzu Corporation, model: HITS-P10) at a test temperature of 25°C in conditions of a striker diameter of ϕ10 mm, a support diameter of ϕ100 mm, and a punching speed of 4.4 m/sec, and fracture morphology was evaluated.

[Table 11]

| | | Example 42 | Example 43 | Example 44 | Comparative Example 18 |
|---|---|---|---|---|---|
| Melt mixture | CNF | 45 | 45 | 45 | - |
| | YS RESIN SX-100 | 19 | 19 | 19 | - |
| | YS POLYSTER T130 | - | - | - | - |
| | Tuftec H1052 | 22 | 22 | 22 | - |
| | Chirabasol P-4 | 7 | 7 | 7 | - |
| | Kayabrid 002PP | 7 | 7 | 7 | - |
| | Total amount | 100 | 100 | 100 | - |
| Composition | PP BC4BW (MFR 5.0) | 88.89 | 77.78 | 66.67 | 100.00 |
| | CNF | 5.00 | 10.00 | 15.00 | - |
| | YS RESIN SX-100 | 2.11 | 4.22 | 6.33 | - |
| | YS POLYSTER T130 | - | - | - | - |
| | Tuftec H1052 | 2.44 | 4.89 | 7.33 | - |
| | Chirabasol P-4 | 0.78 | 1.56 | 2.33 | - |
| | Kayabrid 002PP | 0.78 | 1.56 | 2.33 | - |
| | Total amount | 100.00 | 100.00 | 100.00 | 100.00 |
| Fracture morphology | | YS | YS | YS | YD |

[Table 12]

| | Maximum impact force (kN) | Maximum impact stroke (mm) | Maximum impact energy (J) | Puncture stroke (mm) | Puncture energy (J) |
|---|---|---|---|---|---|
| Example 42 | 2.243 | 15 | 17.092 | 15.8 | 18.640 |
| Example 43 | 1.738 | 10.7 | 8.513 | 11 | 8.953 |
| Example 44 | 1.755 | 10.6 | 8.580 | 10.9 | 8.921 |
| Comparative Example 18 | 2.199 | 14.7 | 15.913 | 19.6 | 24.935 |

Table 11 reveals that fracture morphology in each example was YS. The result suggests that no crack was generated in Examples 42 to 44, and thus the products were able to absorb an external impact energy.

The composition pertaining to the present invention contains a styrenic polymer, a compatibilizer, a thermoplastic elastomer, a surfactant, and the like around CNFs in the composition as shown in the schematic view in FIG. 5. These components supposedly absorb a shearing force of the internal structure caused by an external impact and consequently absorb an external impact energy (i.e., having vibrational energy absorption performance).

(Measurement of vibrational energy absorption performance (dynamic viscoelastic measurement))

The vibrational energy absorption performance of the composition of the present invention can be determined by temperature dependency of tan δ measured by dynamic viscoelastic measurement. In other words, the vibrational energy

absorption performance of a composition is evaluated by a peak value of tan δ. A higher peak value of tan δ means a higher vibrational energy absorption performance, and this enables production of an article achieving high vibration damping properties and sound insulating properties.

(Example 45)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 70:30 (% by mass).

Next, the prepared mixture was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Prime Polymer, J707G, homoPP, MFR 9) at such a ratio as to give a cellulose nanofiber content of 10% by mass in the resulting composition, and the mixture was fed to a twin-screw extruder (Japan Steel Works, model: TEX25αIII) and melted and kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving specimens.

Next, the temperature dependency of the loss tangent (tan δ) was determined with a dynamic viscoelastic tester (manufactured by UBM, model: E-4000-DVE) by the following procedure. The measurement result is shown in FIG. 11.

(i) From a specimen having a thickness of 1.0 mm, a strip specimen having a length of 17 mm and a width of 3.3 mm was cut out as a specimen for dynamic viscoelastic measurement.

(ii) While the specimen was vibrated in the tensile mode, the loss elastic modulus (E") and the storage elastic modulus (E') of the material were determined in an elevated temperature process from -80°C to +150°C. The vibration frequency was set at 10 Hz, and the temperature increase rate was set at 2°C/min.

(iii) A loss tangent (tan δ) was determined as the ratio of a loss elastic modulus (E") to a storage elastic modulus (E').

(Comparative Example 19)

A polypropylene (manufactured by Prime Polymer, J707G, homoPP, MFR 9) was fed to a twin-screw extruder (Japan Steel Works, model: TEX25αIII) and melted and kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving specimens.

Next, the temperature dependency of the loss tangent (tan δ) was determined with a dynamic viscoelastic tester (manufactured by UBM, model: E-4000-DVE) in a similar manner to that in Example 45.

(Example 46)

A significant difference in tan δ value was observed at 50°C in the measurement results in FIG. 11, and thus specimens were prepared by the following procedure. Next, the frequency dependency of the loss tangent (tan δ) was determined with a dynamic viscoelastic tester (manufactured by UBM, model: E-4000-DVE) by the following procedure. The measurement result is shown in FIG. 12.

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810) and a styrenic polymer (manufactured by Yasuhara Chemical, YS RESIN SX100) at a ratio of 70:30 (% by mass).

Next, the prepared mixture was fed to a twin-screw extruder (Japan Steel Works, model: TEX25αIII) to give powdery cellulose nanofibers. The used screws had Φ25 mm, and the resin temperature was set at 140°C.

Next, the prepared powdery cellulose nanofibers were mixed with a polypropylene (manufactured by Prime Polymer, J707G, homoPP, MFR 9) at such a ratio as to give a cellulose nanofiber content of 30% by mass in the resulting composition, and the mixture was fed to a twin-screw extruder (Japan Steel Works, model: TEX25αIII) and melted and kneaded at 175°C, giving pellets.

The prepared pellets were dried at 80°C for 12 hours and then were injection molded with a vacuum injection molding machine (manufactured by Sodick, model: MS100) at a cylinder temperature of 190°C and a mold temperature of 50°C, giving specimens.

Next, the frequency dependency of the loss tangent (tan δ) was determined with a dynamic viscoelastic tester (manufactured by UBM, model: E-4000-DVE) by the following procedure. The measurement result is shown in FIG. 12.

(i) A specimen having a width of 3.3 mm, a thickness of 0.39 mm, and a length of 10 mm was prepared for dynamic viscoelastic measurement.
(ii) While the specimen was vibrated in the tensile mode at a temperature of 50°C, the loss elastic modulus (E") and the storage elastic modulus (E') of the material were determined at frequencies from 0.10 Hz to 900 Hz.
(iii) A loss tangent (tan δ) was determined as the ratio of a loss elastic modulus (E") to a storage elastic modulus (E').

(Comparative Example 20)

A polypropylene (manufactured by Prime Polymer, J707G, homoPP, MFR 9) was fed to a twin-screw extruder (Japan Steel Works, model: TEX25αIII) and melted and kneaded at 175°C, giving pellets.
The prepared pellets were dried at 80°C for 12 hours and then were injection molded with a vacuum injection molding machine (manufactured by Sodick, model: MS100) at a cylinder temperature of 190°C and a mold temperature of 50°C, giving specimens.
Next, the frequency dependency of the loss tangent (tan δ) was determined with a dynamic viscoelastic tester (manufactured by UBM, model: E-4000-DVE) in a similar manner to that in Example 46.
A contribution to damping was observed in terms of tan δ at frequencies from 0.1 to 1,000 Hz in the measurement results in FIG. 12, and this reveals an energy loss by internal friction. The composition pertaining to the present invention therefore has sound absorbing properties. The reason for this is supposed to be the same as the result of the above puncture impact test. In other words, the composition pertaining to the present invention contains a styrenic polymer, a compatibilizer, a thermoplastic elastomer, a surfactant, and the like around CNFs in the composition as shown in the schematic view in FIG. 5. These components supposedly absorb a shear of the internal structure caused by an external energy and consequently absorb an energy (i.e., having vibrational energy absorption performance).

(Example 47)

A mechanohybrid (NIPPON COKE & ENGINEERING, model: MMH-75B/I) was used to mix an aqueous CNF mixture derived from bamboo pulp (a CNF solid content of 35%, a water content of 65%, an average degree of polymerization of 810), a styrenic polymer (manufactured by Yasuhara Chemical, YS RESIN SX100), a thermoplastic elastomer (manufactured by Dow Chemical Company, product name: ENGAGE 8842), a surfactant (manufactured by Taiyo Kagaku, product name: Chirabasol P-4), and a compatibilizer (manufactured by Kayaku Nouryon, product name: Kayabrid 002PP) at a ratio of 50:30:10:5:5 (% by mass).
Next, the prepared mixture was fed to a twin-screw extruder (Japan Steel Works, model: TEX25αIII) to give powdery cellulose nanofibers. The used screws had Φ25 mm, and the resin temperature was set at 140°C.
Next, the prepared powdery cellulose nanofibers were mixed with a polypropylene (manufactured by Prime Polymer, J707G, homoPP, MFR 30) at such a ratio as to give a cellulose nanofiber content of 10% by mass in the resulting composition, and the mixture was fed to a twin-screw extruder (Japan Steel Works, model: TEX25αIII) and melted and kneaded at 175°C, giving pellets.
The prepared pellets were dried at 80°C for 12 hours and then were injection molded with an injection molding machine (manufactured by Nissei Plastic Industrial, model: NPX7-1F) at a cylinder temperature of 190°C and a mold temperature of 50°C, giving strip specimens and dumbbell specimens 1BA.
Next, the prepared specimens were used to perform physical property measurements. The measurement results and the used amounts are shown in Table 13.

(Example 48)

Physical property measurements were performed in the same manner as in Example 47 except that a thermoplastic elastomer (manufactured by Asahi Kasei, product name: Tuftec H1052) was used in place of the thermoplastic elastomer (manufactured by Dow Chemical Company, product name: ENGAGE 8842) in Example 47.

(Example 49)

Physical property measurements were performed in the same manner as in Example 47 except that the aqueous CNF mixture derived from bamboo pulp in Example 47 was used at a ratio of 60, the thermoplastic elastomer (manufactured by Dow Chemical Company, product name: ENGAGE 8842) in Example 47 was used at a ratio of 5, and no compatibilizer (manufactured by Kayaku Nouryon, product name: Kayabrid 002PP) was added.

(Example 50)

Physical property measurements were performed in the same manner as in Example 47 except that the aqueous CNF mixture derived from bamboo pulp in Example 47 was used at a ratio of 60, a thermoplastic elastomer (manufactured by Asahi Kasei, product name: Tuftec H1052) was used at a ratio of 5 in place of the thermoplastic elastomer (manufactured by Dow Chemical Company, product name: ENGAGE 8842) in Example 47, and no compatibilizer (manufactured by Kayaku Nouryon, product name: Kayabrid 002PP) was added.

(Comparative Example 21)

A polypropylene (manufactured by Prime Polymer, J707G, homoPP, MFR 30) was fed to a twin-screw extruder (Japan Steel Works, model: TEX25αIII) and melted and kneaded at 175°C, giving pellets.

The prepared pellets were dried at 80°C for 12 hours and then were injection molded with an injection molding machine (manufactured by Nissei Plastic Industrial, model: NPX7-1F) at a cylinder temperature of 190°C and a mold temperature of 50°C, giving strip specimens and dumbbell specimens 1BA.

[Table 13]

| | | Example 47 | Example 48 | Example 49 | Example 50 | Comparative Example 21 |
|---|---|---|---|---|---|---|
| Melt mixture | CNF | 50 | 50 | 60 | 60 | - |
| | YS RESIN SX-100 | 30 | 30 | 30 | 30 | - |
| | ENGAGE8842 | 10 | - | 5 | - | - |
| | Tuftec H1052 | - | 10 | - | 5 | - |
| | Chirabasol P-4 | 5 | 5 | 5 | 5 | - |
| | Kayabrid 002PP | 5 | 5 | - | - | - |
| | Total amount | 100 | 100 | 100 | 100 | - |
| Composition | PP J707G (MFR 30) | 80.00 | 80.00 | 83.33 | 83.33 | 100.00 |
| | CNF | 10.00 | 10.00 | 10.00 | 10.00 | - |
| | YS RESIN SX-100 | 6.00 | 6.00 | 5.00 | 5.00 | - |
| | ENGAGE8842 | 2.00 | - | 0.83 | - | - |
| | Tuftec H1052 | - | 2.00 | - | 0.83 | - |
| | Chirabasol P-4 | 1.00 | 1.00 | 0.83 | 0.83 | - |
| | Kayabrid 002PP | 1.00 | 1.00 | - | - | - |
| | Total amount | 100.00 | 100.00 | 100.00 | 100.00 | 100.00 |
| Molding temperature | Cylinder (°C) | 190 | 190 | 190 | 190 | 190 |
| | Mold (°C) | 50 | 50 | 50 | 50 | 50 |
| Physical property values | Bending elastic modulus (MPa) | 1531 | 1526 | 1642 | 1581 | 1148 |
| | Bending stress (MPa) | 34.08 | 34.01 | 35.25 | 32.87 | 30.18 |
| | Tensile elastic modulus (MPa) | 2017 | 1916 | 2161 | 2188 | 1677 |
| | Tensile yield stress (MPa) | 26.3 | 27.02 | 24.95 | 23.53 | 25.06 |
| | Tensile yield strain (%) | 6.47 | 8.1 | 4.4 | 4.3 | 5.8 |

Table 13 reveals that each example exhibits a higher bending elastic modulus and a higher tensile elastic modulus than the comparative example.

Industrial Applicability

The melt mixture of the present invention has excellent uniform dispersibility in a resin, compatibility with a resin, and interfacial adhesiveness and thus can be easily uniformly blended in a thermoplastic resin, a thermosetting resin, or a rubber component. The melt mixture can also be subjected to a common resin molding method such as injection molding to yield products for various purposes. The melt mixture can be suitably used for, for example, industrial machine parts, general machine parts, automobile/railway/vehicle parts (for example, outer panels, chassis, aerodynamic members, tires, and seats), ship members (for example, hulls and seats), airplane parts (for example, seats and interior materials), spacecraft/artificial satellite members (for example, motor cases and antennas), electronic/electric parts, sliding members (for example, gears, bearings, and metals), building/construction/water-treatment materials (for example, vibration control/vibration absorption materials and supports), paints, inks, adhesives, sealing agents, coating agents, binding agents, packing materials, wrapping materials, and film materials.

## Claims

1. A melt mixture comprising:

cellulose nanofibers not chemically modified of following Chemical Formula 1,

[Chemical Formula 1]

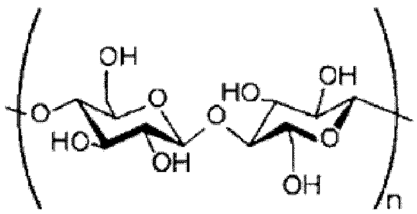

;

and
0.05 to 5 parts by mass of a styrenic polymer relative to 1 part by mass of the cellulose nanofibers, the styrenic polymer being prepared by polymerizing a monomer having a styrene skeleton in presence of a Friedel-Crafts catalyst, **characterised in that** the average thickness of the cellulose nanofibers is 3-200 nm, measured according to the description, and the average length is more than 0.1 μm, measured according to the description, and
the weight average molecular weight of the styrene-based polymer is not less than 200 g/mol and not more than 4000 g/mol , measured by gel permeation chromatography; wherein the melt mixture has a YI value of 38.02 or less, and wherein the yellowness index YI is measured according to JIS K 7373 as detailed in the description.

2. The melt mixture according to claim 1, further comprising one or more additives selected from the group consisting of a styrenic thermoplastic elastomer, an olefinic thermoplastic elastomer, a polyvinyl chloride thermoplastic elastomer, a urethane thermoplastic elastomer, an ester thermoplastic elastomer, an amide thermoplastic elastomer, a 1,2-BR thermoplastic elastomer, a fluorine thermoplastic elastomer, a compatibilizer, a surfactant, a starch, a polysaccharide, gelatin, glue, a natural protein, tannin, zeolite, ceramics, a metal powder, a pigment, a dye, a reinforcement, a filler, a heat-resistant material, an oxidation inhibitor, a heat stabilizer, a weathering agent, a lubricant, a release agent, a crystal nucleating agent, a coloring agent, a flavoring agent, a leveling agent, a plasticizer, a flow improver, a conductive agent, an electrification inhibitor, an ultraviolet absorber, an ultraviolet dispersant, a deodorant, and a metallic soap; wherein the melt mixture has a YI value of 38.02 or less.

3. A method for producing the melt mixture according to claim 1, the method comprising:

mixing cellulose nanofibers as defined in claim 1 and a styrenic polymer prepared by polymerizing a monomer having a styrene skeleton in a presence of a Friedel-Crafts catalyst, to give a mixture; and
applying heat and shear force to the mixture to remove water from the mixture; wherein the melt mixture has a YI value of 38.02 or less.

**4.** A composition comprising:

the melt mixture according to claim 1 or claim 2; and
one or more components selected from the group consisting of a thermoplastic resin, a thermosetting resin, and a rubber.

**5.** A method for producing a composition according to claim 4, the method comprising:

mixing cellulose nanofibers, a styrenic polymer prepared by polymerizing a monomer having a styrene skeleton in a presence of a Friedel-Crafts catalyst, and one or more additives selected from the group consisting of a styrenic thermoplastic elastomer, an olefinic thermoplastic elastomer, a polyvinyl chloride thermoplastic elastomer, a urethane thermoplastic elastomer, an ester thermoplastic elastomer, an amide thermoplastic elastomer, a 1,2-BR thermoplastic elastomer, a fluorine thermoplastic elastomer, a compatibilizer, a surfactant, a starch, a polysaccharide, gelatin, glue, a natural protein, tannin, zeolite, ceramics, a metal powder, a pigment, a dye, a reinforcement, a filler, a heat-resistant material, an oxidation inhibitor, a heat stabilizer, a weathering agent, a lubricant, a release agent, a crystal nucleating agent, a coloring agent, a flavoring agent, a leveling agent, a plasticizer, a flow improver, a conductive agent, an electrification inhibitor, an ultraviolet absorber, an ultraviolet dispersant, a deodorant, and a metallic soap, to give a mixture;
applying heat and shear force to the mixture to remove water from the mixture to give a melt mixture having a YI value of 38.02 or less; and
melting and kneading the melt mixture with one or more components selected from the group consisting of a thermoplastic resin, a thermosetting resin, and a rubber.

**6.** A molded article comprising the composition according to claim 4.

## Patentansprüche

**1.** Eine Schmelzmischung, die Folgendes beinhaltet:

Cellulose-Nanofasern, die nicht chemisch modifiziert sind, mit der folgenden chemischen Formel 1,

[chemische Formel 1]

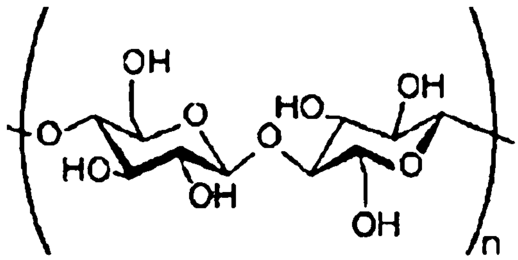

;

und
zu 0,05 bis 5 Massenteile ein Styrolpolymer, bezogen auf 1 Massenteil der Cellulose-Nanofasern, wobei das Styrolpolymer durch Polymerisieren eines Monomers mit einem Styrolgerüst in Gegenwart eines Friedel-Crafts-Katalysators zubereitet wird,
**dadurch gekennzeichnet, dass** die durchschnittliche Dicke der Cellulose-Nanofasern 3-200 nm beträgt, gemessen gemäß der Beschreibung, und die durchschnittliche Länge mehr als 0,1 µm beträgt, gemessen gemäß der Beschreibung, und
das gewichtsmittlere Molekulargewicht des Polymers auf Styrolbasis nicht weniger als 200 g/mol und nicht mehr als 4000 g/mol beträgt, gemessen durch Gelpermeationschromatographie; wobei die Schmelzmischung einen YI-Wert von 38,02 oder weniger aufweist und
wobei der Vergilbungsindex YI gemäß JIS K 7373, wie in der Beschreibung dargelegt, gemessen wird.

**2.** Schmelzmischung gemäß Anspruch 1, die ferner einen oder mehrere Zusatzstoffe beinhaltet, ausgewählt aus der Gruppe bestehend aus einem thermoplastischen Styrolelastomer, einem thermoplastischen Olefinelastomer, einem thermoplastischen Polyvinylchloridelastomer, einem thermoplastischen Urethanelastomer, einem thermoplastischen Esterelastomer, einem thermoplastischen Amidelastomer, einem thermoplastischen 1,2-BR-Elastomer, einem thermoplastischen Fluorelastomer, einem Kompatibilisator, einem Tensid, einer Stärke, einem Polysaccharid, Gelatine, Klebstoff, einem natürlichen Protein, Tannin, Zeolith, Keramik, einem Metallpulver, einem Pigment, einem Farbstoff, einer Verstärkung, einem Füllstoff, einem wärmebeständigen Material, einem Oxidationsinhibitor, einem Wärmestabilisator, einem Verwitterungsmittel, einem Schmiermittel, einem Trennmittel, einem Kristallkeimbildner, einem Färbemittel, einem Aromastoff, einem Egalisierungsmittel, einem Weichmacher, einem Fließverbesserer, einem Leitfähigkeitsmittel, einem Elektrifizierungsinhibitor, einem Ultraviolettabsorber, einem Ultraviolettdispergiermittel, einem Deodorant und einer Metallseife; wobei die Schmelzmischung einen YI-Wert von 38,02 oder weniger aufweist.

**3.** Ein Verfahren zur Herstellung der Schmelzmischung gemäß Anspruch 1, wobei das Verfahren Folgendes beinhaltet:

Mischen von Cellulose-Nanofasern, wie in Anspruch 1 definiert, und einem Styrolpolymer, die durch Polymerisieren eines Monomers mit einem Styrolgerüst in einer Gegenwart eines Friedel-Crafts-Katalysators zubereitet wird, um eine Mischung zu ergeben; und
Anwenden von Wärme und Scherkraft auf die Mischung, um Wasser aus der Mischung zu entfernen; wobei die Schmelzmischung einen YI-Wert von 38,02 oder weniger aufweist.

**4.** Eine Zusammensetzung, die Folgendes beinhaltet:

die Schmelzmischung gemäß Anspruch 1 oder Anspruch 2; und
eine oder mehrere Komponenten, ausgewählt aus der Gruppe bestehend aus einem thermoplastischen Harz, einem wärmehärtbaren Harz und einem Kautschuk.

**5.** Ein Verfahren zur Herstellung einer Zusammensetzung gemäß Anspruch 4, wobei das Verfahren Folgendes beinhaltet:

Mischen von Cellulose-Nanofasern, einem Styrolpolymer, das durch Polymerisieren eines Monomers mit einem Styrolgerüst in einer Gegenwart eines Friedel-Crafts-Katalysators zubereitet wird, und einem oder mehreren Zusatzstoffen, ausgewählt aus der Gruppe bestehend aus einem thermoplastischen Styrolelastomer, einem thermoplastischen Olefinelastomer, einem thermoplastischen Polyvinylchloridelastomer, einem thermoplastischen Urethanelastomer, einem thermoplastischen Esterelastomer, einem thermoplastischen Amidelastomer, einem thermoplastischen 1,2-BR-Elastomer, einem thermoplastischen Fluorelastomer, einem Kompatibilisator, einem Tensid, einer Stärke, einem Polysaccharid, Gelatine, Klebstoff, einem natürlichen Protein, Tannin, Zeolith, Keramik, einem Metallpulver, einem Pigment, einem Farbstoff, einer Verstärkung, einem Füllstoff, einem wärmebeständigen Material, einem Oxidationsinhibitor, einem Wärmestabilisator, einem Verwitterungsmittel, einem Schmiermittel, einem Trennmittel, einem Kristallkeimbildner, einem Färbemittel, einem Aromastoff, einem Egalisierungsmittel, einem Weichmacher, einem Fließverbesserer, einem Leitfähigkeitsmittel, einem Elektrifizierungsinhibitor, einem Ultraviolettabsorber, einem Ultraviolettdispergiermittel, einem Deodorant und einer Metallseife, um eine Mischung zu ergeben;
Anwenden von Wärme und Scherkraft auf die Mischung, um Wasser aus der Mischung zu entfernen, um eine Schmelzmischung mit einem YI-Wert von 38,02 oder weniger zu ergeben; und
Schmelzen und Kneten der Schmelzmischung mit einer oder mehreren Komponenten, ausgewählt aus der Gruppe bestehend aus einem thermoplastischen Harz, einem wärmehärtbaren Harz und einem Kautschuk.

**6.** Ein Formartikel, der die Zusammensetzung gemäß Anspruch 4 beinhaltet.

## Revendications

**1.** Un mélange à l'état fondu comprenant :

des nanofibres de cellulose non chimiquement modifiées de la Formule Chimique 1 suivante,

[Formule Chimique 1]

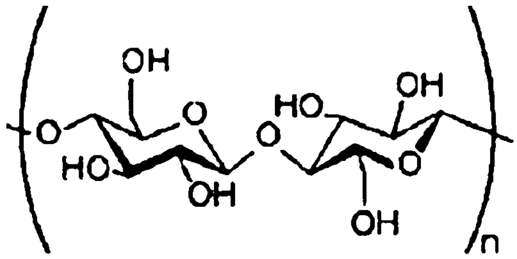

;

et

0,05 à 5 parties en masse d'un polymère styrénique par rapport à 1 partie en masse des nanofibres de cellulose, le polymère styrénique étant préparé par polymérisation d'un monomère ayant un squelette styrène en présence d'un catalyseur de Friedel-Crafts,

**caractérisé en ce que** l'épaisseur moyenne des nanofibres de cellulose est de 3 à 200 nm, mesurée selon la description, et la longueur moyenne est supérieure à 0,1 μm,

mesurée selon la description, et

le poids moléculaire moyen en poids du polymère à base de styrène n'est pas inférieur à 200 g/mol et pas supérieur à 4000 g/mol, mesuré par chromatographie par perméation de gel ; dans lequel le mélange à l'état fondu a une valeur YI de 38,02 ou moins, et

dans lequel l'indice de jaunissement YI est mesuré selon JIS K 7373 comme détaillé dans la description.

**2.** Le mélange à l'état fondu selon la revendication 1, comprenant en outre un ou plusieurs additifs sélectionnés dans le groupe constitué d'un élastomère thermoplastique styrénique, d'un élastomère thermoplastique oléfinique, d'un élastomère thermoplastique de poly(chlorure de vinyle), d'un élastomère thermoplastique d'uréthane, d'un élastomère thermoplastique d'ester, d'un élastomère thermoplastique d'amide, d'un élastomère thermoplastique de 1,2-BR, d'un élastomère thermoplastique de fluor, d'un agent de compatibilisation, d'un tensioactif, d'un amidon, d'un polysaccharide, de gélatine, de colle, d'une protéine naturelle, de tanin, de zéolite, de céramique, d'une poudre métallique, d'un pigment, d'un colorant, d'un renfort, d'une charge, d'un matériau résistant à la chaleur, d'un inhibiteur d'oxydation, d'un stabilisateur thermique, d'un agent de dégradation, d'un lubrifiant, d'un agent de démoulage, d'un agent de nucléation de cristaux, d'un agent colorant, d'un agent aromatisant, d'un agent égalisant, d'un plastifiant, d'un agent améliorant l'écoulement, d'un agent conducteur, d'un inhibiteur d'électrification, d'un absorbeur d'ultraviolet, d'un dispersant d'ultraviolet, d'un déodorant, et d'un savon métallique ; dans lequel le mélange à l'état fondu a une valeur YI de 38,02 ou moins.

**3.** Un procédé de production du mélange à l'état fondu selon la revendication 1, le procédé comprenant :

le mélange de nanofibres de cellulose telles que définies dans la revendication 1 et

d'un polymère styrénique préparé par polymérisation d'un monomère ayant un squelette styrène en présence d'un catalyseur de Friedel-Crafts, pour donner un mélange ; et

l'application de chaleur et d'une force de cisaillement au mélange pour éliminer l'eau du mélange ; dans lequel le mélange à l'état fondu a une valeur YI de 38,02 ou moins.

**4.** Une composition comprenant :

le mélange à l'état fondu selon la revendication 1 ou la revendication 2 ; et

un ou plusieurs composants sélectionnés dans le groupe constitué d'une résine thermoplastique, d'une résine thermodurcissable, et d'un caoutchouc.

**5.** Un procédé de production d'une composition selon la revendication 4, le procédé comprenant :

le mélange de nanofibres de cellulose, d'un polymère styrénique préparé par polymérisation d'un monomère ayant un squelette styrène en présence d'un catalyseur de Friedel-Crafts, et d'un ou plusieurs additifs sélectionnés dans le groupe constitué d'un élastomère thermoplastique styrénique, d'un élastomère thermoplastique oléfinique, d'un élastomère thermoplastique de poly(chlorure de vinyle), d'un élastomère thermoplastique d'uréthane, d'un élastomère thermoplastique d'ester, d'un élastomère thermoplastique d'amide, d'un élastomère thermoplastique de 1,2-BR, d'un élastomère thermoplastique de fluor, d'un agent de compatibilisation, d'un

tensioactif, d'un amidon, d'un polysaccharide, de gélatine, de colle, d'une protéine naturelle, de tanin, de zéolite, de céramique, d'une poudre métallique, d'un pigment, d'un colorant, d'un renfort, d'une charge, d'un matériau résistant à la chaleur, d'un inhibiteur d'oxydation, d'un stabilisateur thermique, d'un agent de dégradation, d'un lubrifiant, d'un agent de démoulage, d'un agent de nucléation de cristaux, d'un agent colorant, d'un agent aromatisant, d'un agent égalisant, d'un plastifiant, d'un agent améliorant l'écoulement, d'un agent conducteur, d'un inhibiteur d'électrification, d'un absorbeur d'ultraviolet, d'un dispersant d'ultraviolet, d'un déodorant, et d'un savon métallique, pour donner un mélange ;

l'application de chaleur et d'une force de cisaillement au mélange pour éliminer l'eau du mélange pour donner un mélange à l'état fondu ayant une valeur YI de 38,02 ou moins ; et

la fusion et le malaxage du mélange à l'état fondu avec un ou plusieurs composants sélectionnés dans le groupe constitué d'une résine thermoplastique, d'une résine thermodurcissable, et d'un caoutchouc.

**6.** Un article moulé comprenant la composition selon la revendication 4.

FIG. 1

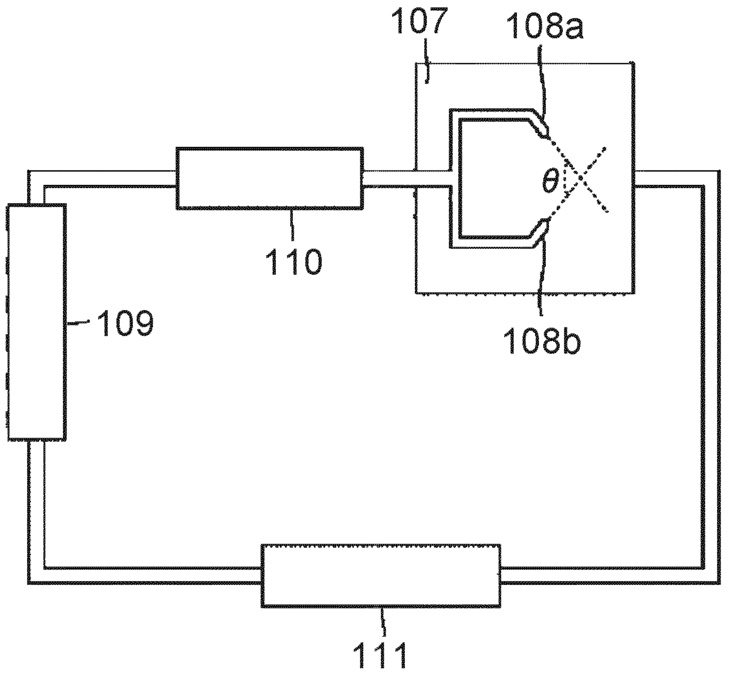


FIG. 2

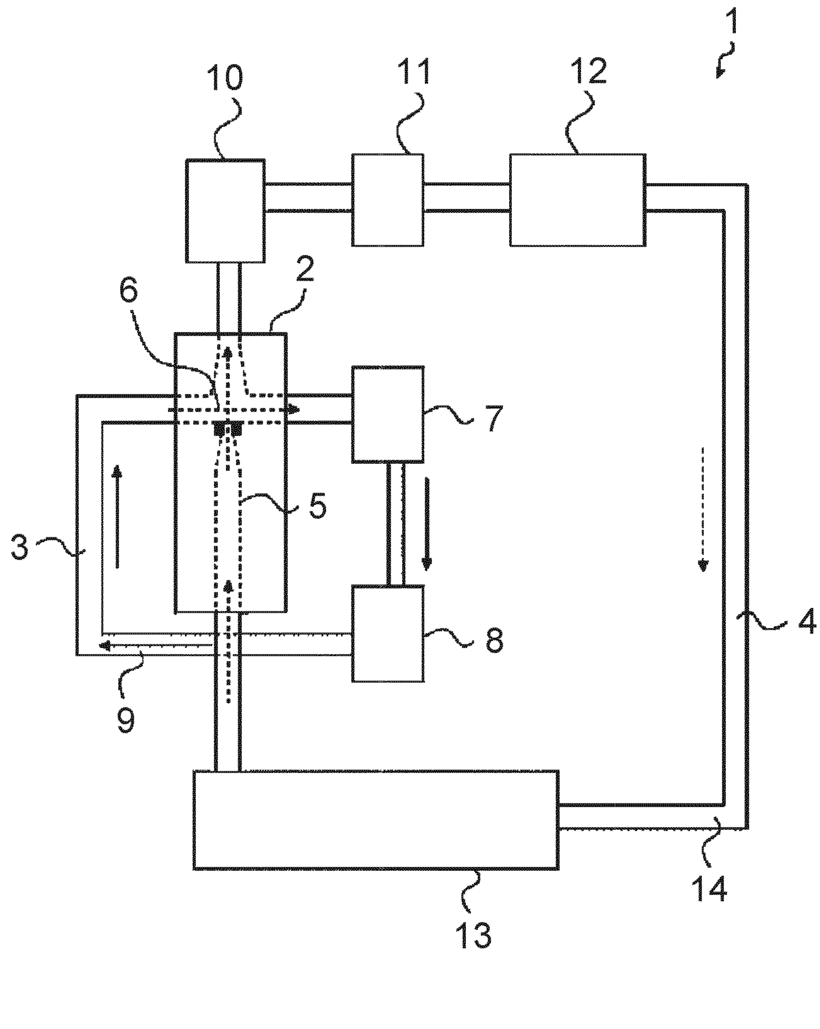

FIG. 3

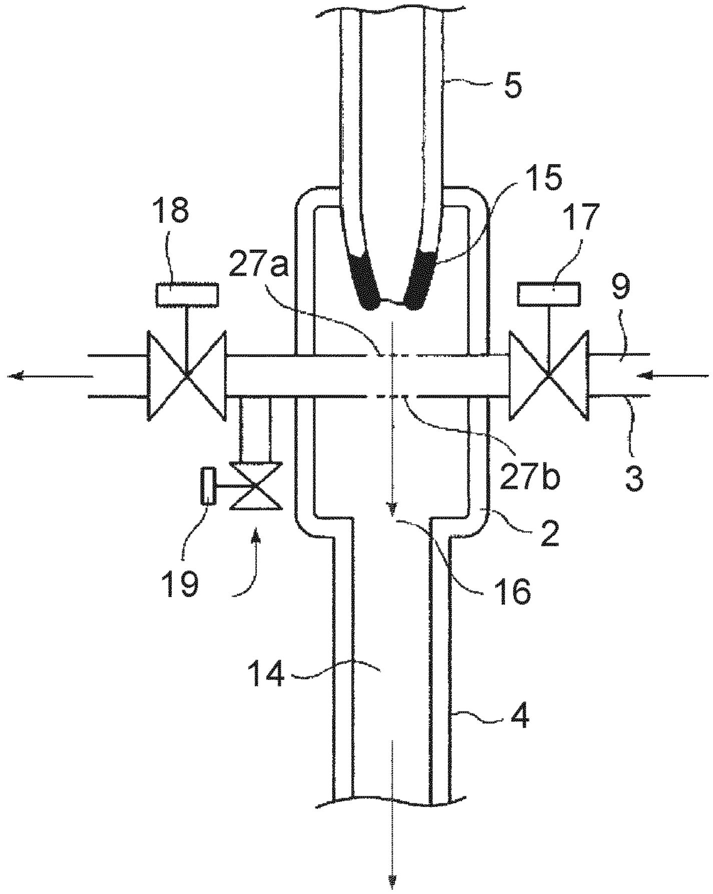
5
15
18
17
27a
9
27b
3
2
19
16
14
4

FIG. 4

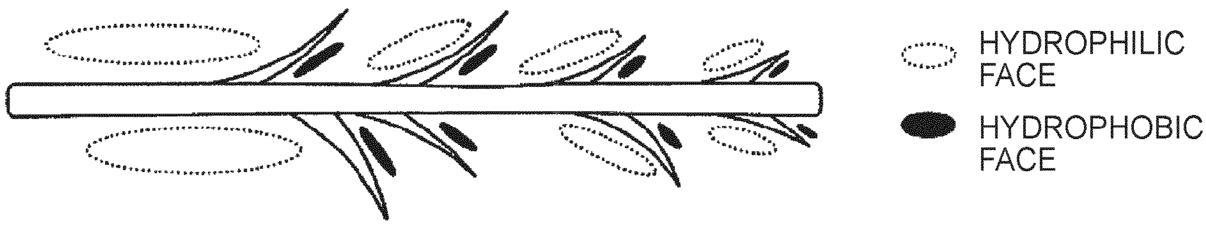
HYDROPHILIC FACE
HYDROPHOBIC FACE

FIG. 5

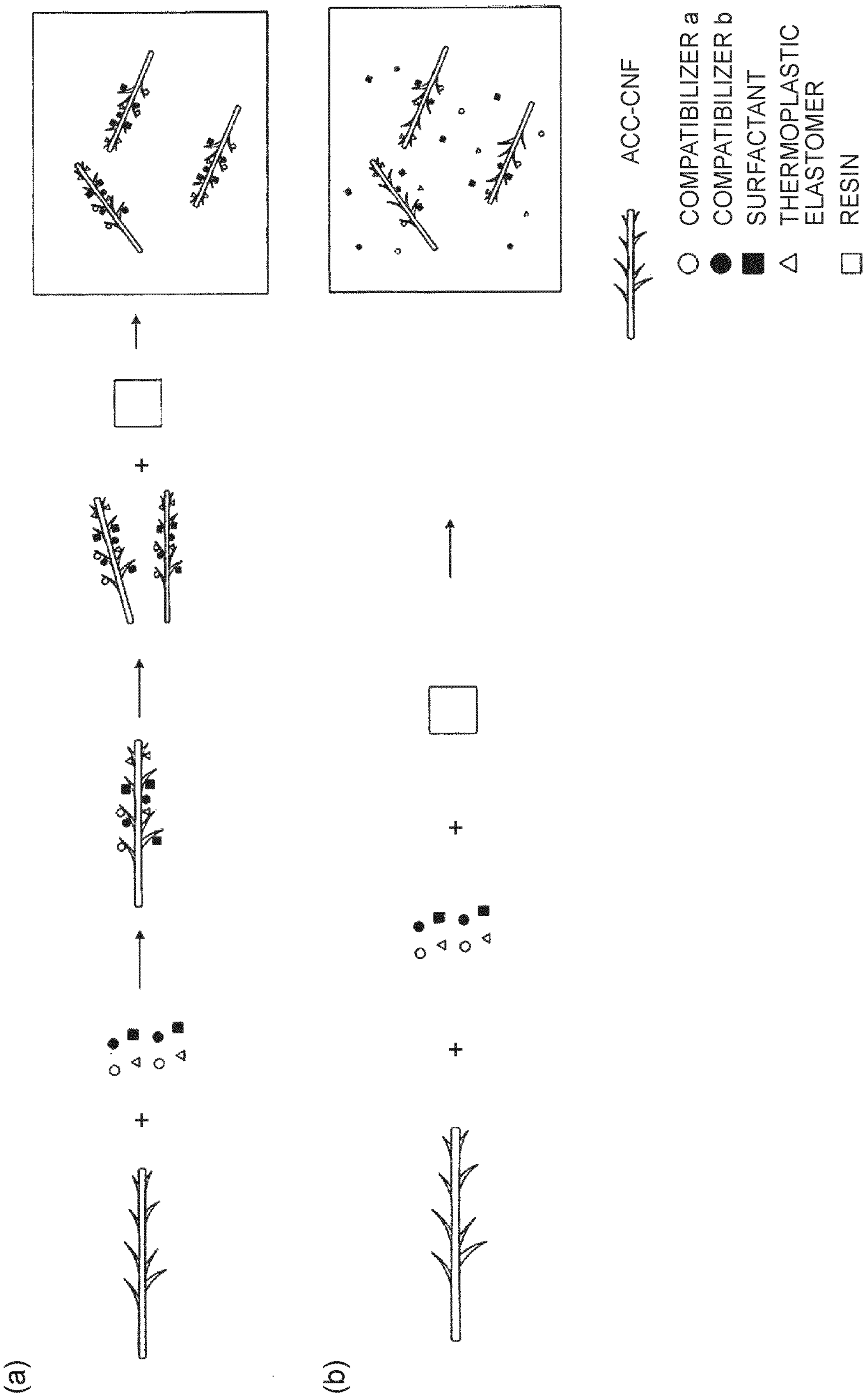
(a)
(b)
ACC-CNF
COMPATIBILIZER a
COMPATIBILIZER b
SURFACTANT
THERMOPLASTIC ELASTOMER
RESIN

FIG. 6

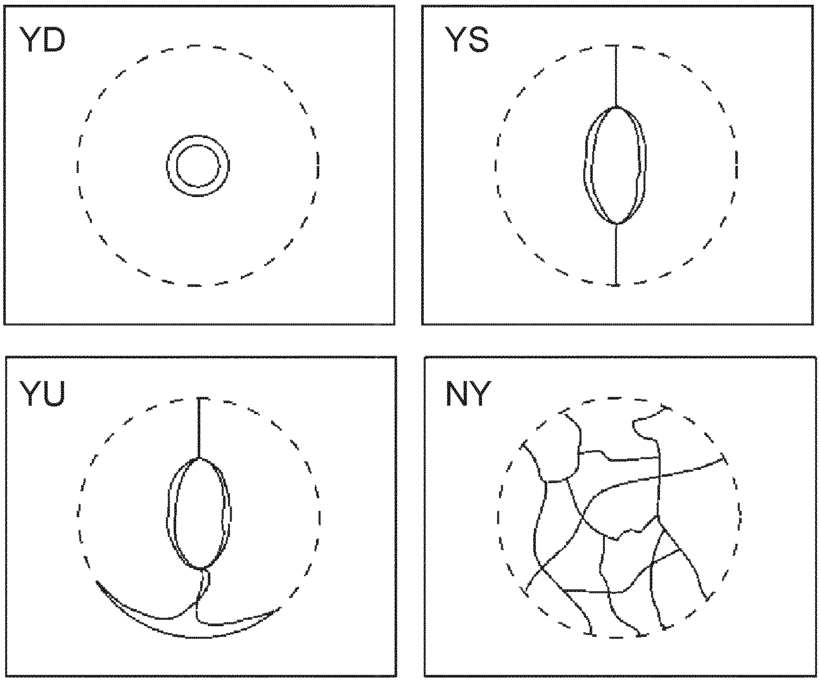


FIG. 7

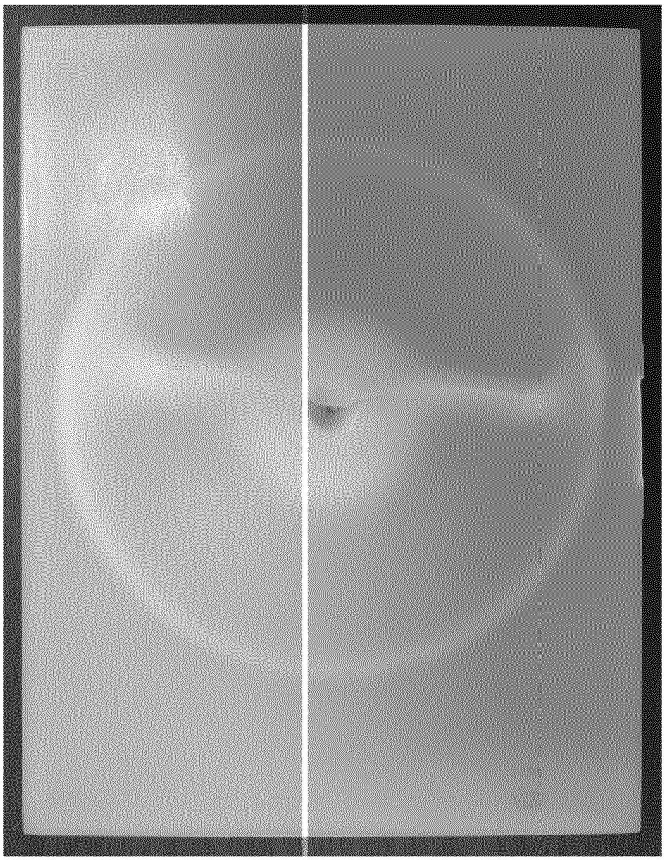

FIG. 8

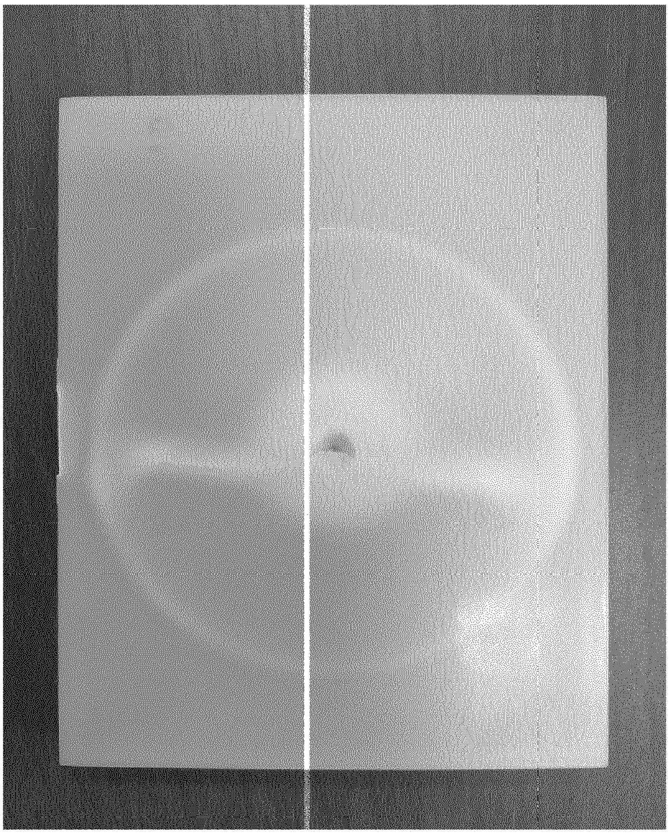

FIG. 9

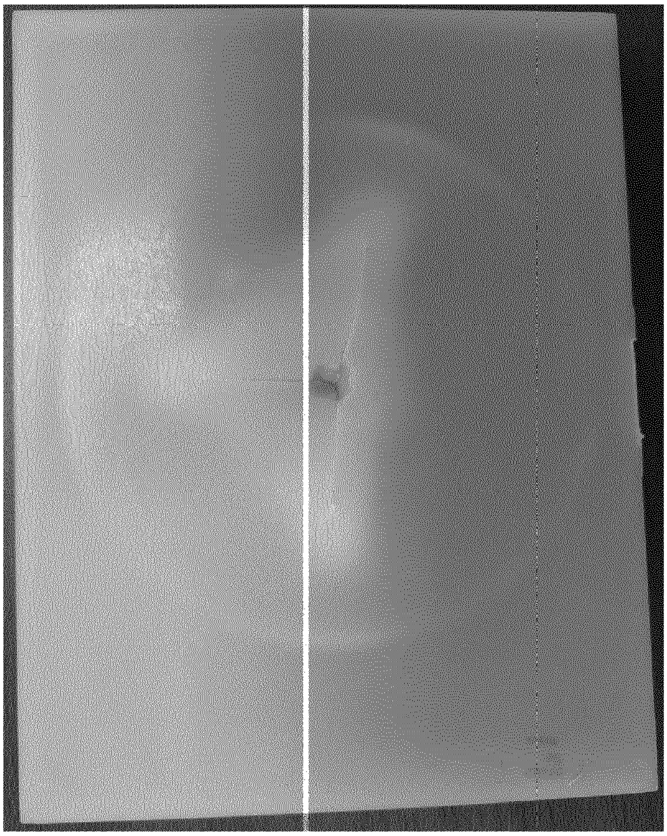

FIG. 10

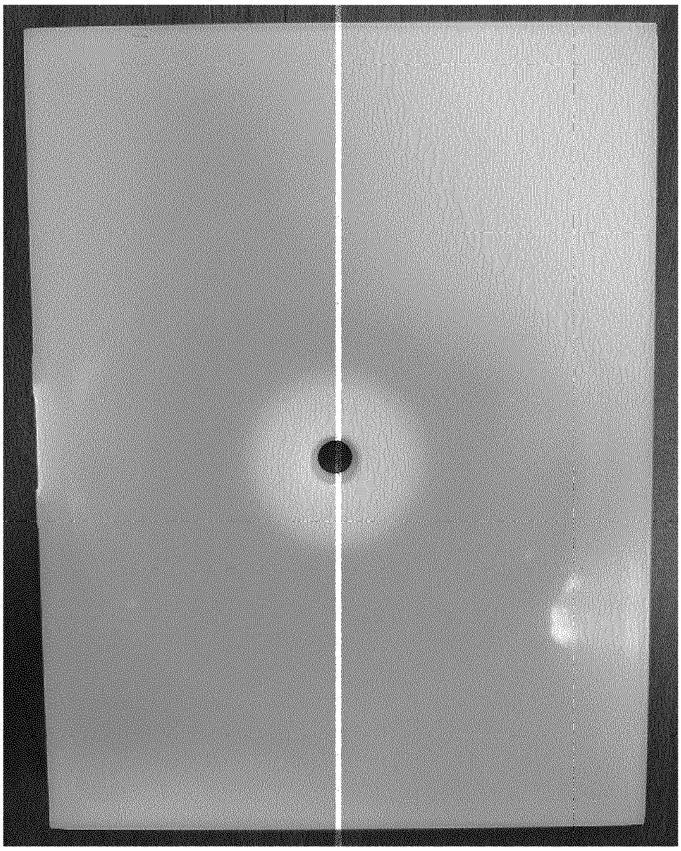

FIG. 11

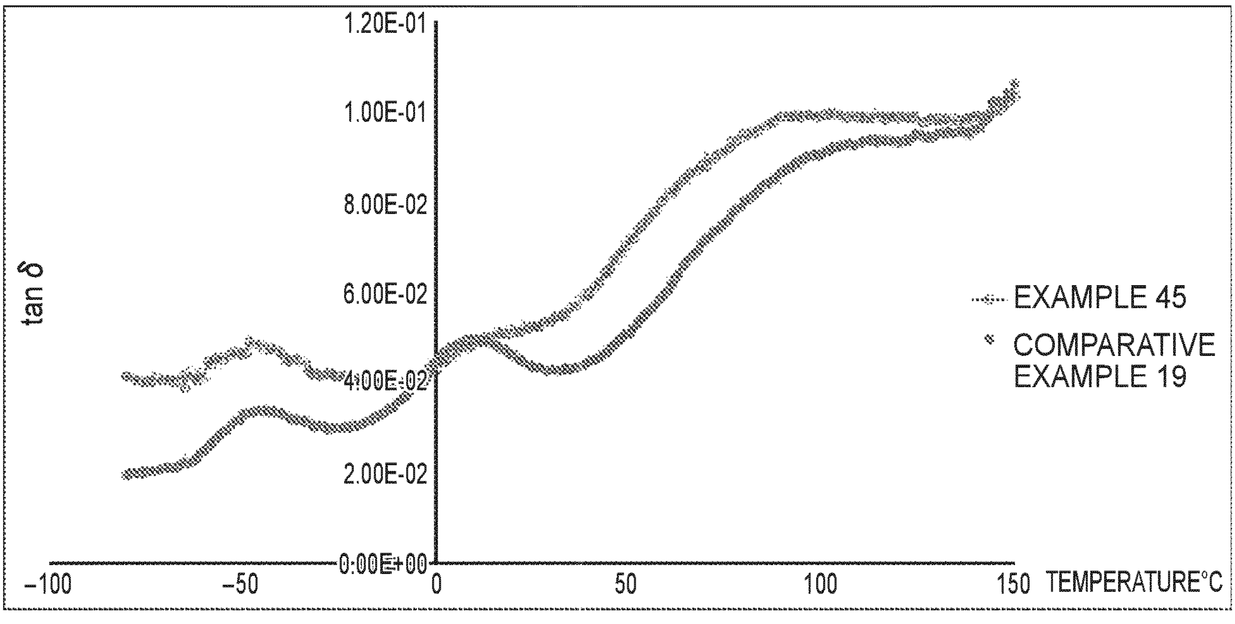
1.20E-01
1.00E-01
8.00E-02
6.00E-02
4.00E-02
2.00E-02
0.00E+00
tan δ
−100
−50
0
50
100
150
TEMPERATURE°C
EXAMPLE 45
COMPARATIVE EXAMPLE 19

FIG. 12

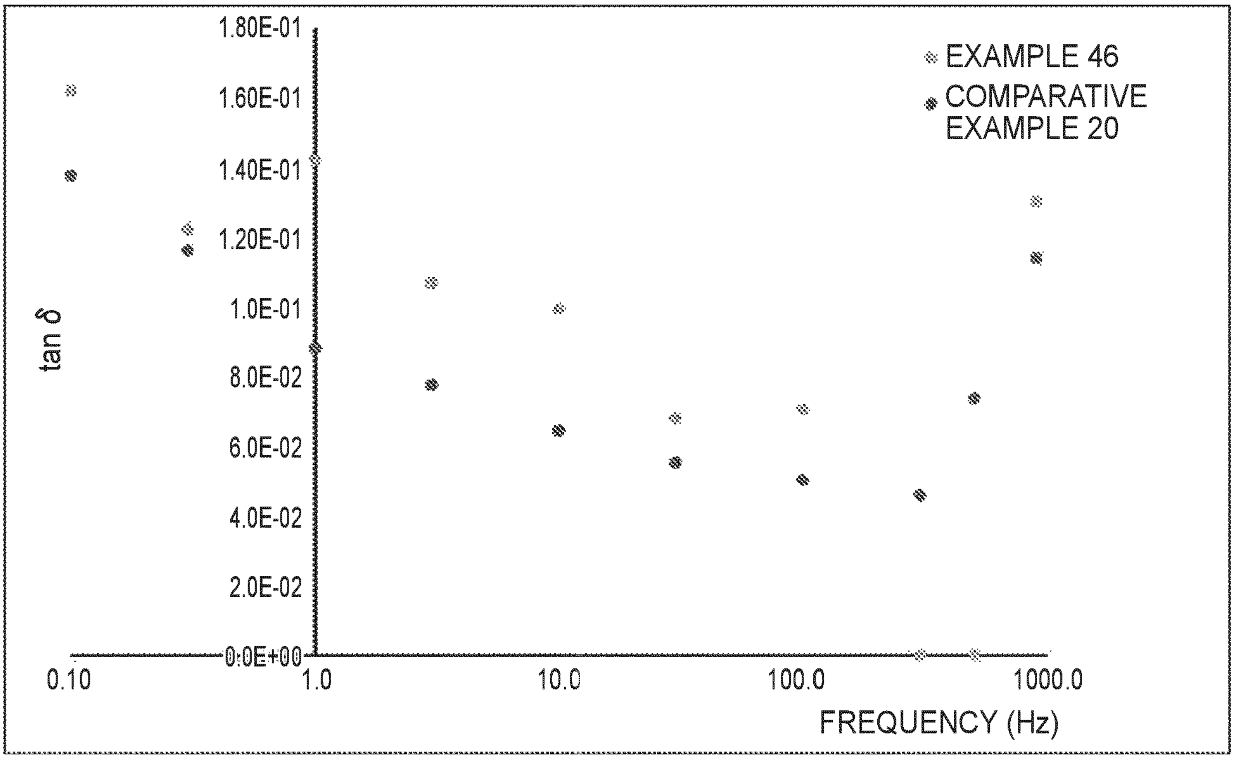
tan δ
1.80E-01
1.60E-01
1.40E-01
1.20E-01
1.0E-01
8.0E-02
6.0E-02
4.0E-02
2.0E-02
0.0E+00
0.10
1.0
10.0
100.0
1000.0
FREQUENCY (Hz)
EXAMPLE 46
COMPARATIVE EXAMPLE 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010215791 A
- JP 6189559 B
- EP 3211031 A1


### Non-patent literature cited in the description


- **MA LIBO et al.** Modified treatment for carbonized cellulose nanofiber application in composites. *COMPOSITES PART A*, 07 September 2016, vol. 90
- **NAGALAKSHMAIAH MALLADI et al.** Melt extrusion of polystyrene reinforced with cellulose nanocrystals modified using poly[(styrene) -co- (2-ethylhexyl acrylate)] latex particles. *EUROPEAN POLYMER JOURNAL*, 18 April 2017, vol. 91